(19) Europäisches Patentamt
European Patent Office
Office européen des brevets

(11) **EP 2 999 284 B1**

(12) **EUROPEAN PATENT SPECIFICATION**

(45) Date of publication and mention
of the grant of the patent:
**15.08.2018 Bulletin 2018/33**

(51) Int Cl.:
***H04W 74/00*** *(2009.01)*    ***H04W 8/00*** *(2009.01)*
***H04W 92/18*** *(2009.01)*

(21) Application number: **14798262.3**

(22) Date of filing: **13.05.2014**

(86) International application number:
**PCT/JP2014/062696**

(87) International publication number:
**WO 2014/185400 (20.11.2014 Gazette 2014/47)**

(54) **USER DEVICE AND METHOD FOR ADJUSTING DISCOVERY SIGNAL INTERVAL**

BENUTZERVORRICHTUNG UND VERFAHREN ZUR EINSTELLUNG EINES ERKENNUNGSSIGNALINTERVALLS

DISPOSITIF D'UTILISATEUR ET PROCÉDÉ DE RÉGLAGE D'INTERVALLE ENTRE SIGNAUX DE DÉCOUVERTE,

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.05.2013  JP 2013105148**

(43) Date of publication of application:
**23.03.2016  Bulletin 2016/12**

(73) Proprietor: **NTT DOCOMO, INC.**
**Chiyoda-ku**
**Tokyo 100-6150 (JP)**

(72) Inventors:
 • **NAGATA, Satoshi**
   **Tokyo 100-6150 (JP)**
 • **ZENG, Yongbo**
   **Beijing 100190 (CN)**
 • **ZHAO, Qun**
   **Beijing 100190 (CN)**
 • **WANG, Xiaoli**
   **Beijing 100190 (CN)**
 • **ZHANG, Yongsheng**
   **Beijing 100190 (CN)**

(74) Representative: **Hoffmann Eitle**
**Patent- und Rechtsanwälte PartmbB**
**Arabellastraße 30**
**81925 München (DE)**

(56) References cited:
**WO-A1-2009/158656    JP-A- 2013 514 738**

US-A1- 2011 153 773    US-A1- 2012 045 989
US-A1- 2012 191 966    US-A1- 2012 269 072
US-A1- 2012 269 072    US-A1- 2012 269 115
US-A1- 2013 122 893

 • **NTT DOCOMO: "Initial Views on Unified Approach for D2D Discovery", 3GPP DRAFT; R1-132371 D2D DISCOVERY UNIFIED, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Fukuoka, Japan; 20130520 - 20130524 11 May 2013 (2013-05-11), XP050698136, Retrieved from the Internet: URL:http://www.3gpp.org/ftp/tsg_ran/WG1_RL 1/TSGR1_73/Docs/ [retrieved on 2013-05-11]**
 • **NTT DOCOMO ET AL: "Evaluation of D2D discovery message and transmission for type 1 discovery", 3GPP DRAFT; R1-135521 EVALUATION OF D2D DISCOVERY MESSAGE AND TRANSMISSION FOR TYPE 1 DISCOVERY, 3RD GENERATION PARTNERSHIP PROJECT (3GPP), MOBILE COMPETENCE CENTRE ; 650, ROUTE DES LUCIOLES ; F-06921 , vol. RAN WG1, no. San Francisco, USA; 20131111 - 20131115 2 November 2013 (2013-11-02), XP050751022, Retrieved from the Internet: URL:http://www.3gpp.org/ftp/tsg_ran/WG1_RL 1/TSGR1_75/Docs/ [retrieved on 2013-11-02]**

- **INTERDIGITAL: "D2D Discovery in LTE", 3GPP DRAFT; R1-132187, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Fukuoka, Japan; 20130520 - 20130524 11 May 2013 (2013-05-11), XP050697959, Retrieved from the Internet: URL:http://www.3gpp.org/ftp/tsg_ran/WG1_RL 1/TSGR1_73/Docs/ [retrieved on 2013-05-11]**

- **HUAWEI ET AL: "PHY considerations for discovery signal design", 3GPP DRAFT; R1-132413, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Fukuoka, Japan; 20130520 - 20130524 11 May 2013 (2013-05-11), XP050698177, Retrieved from the Internet: URL:http://www.3gpp.org/ftp/tsg_ran/WG1_RL 1/TSGR1_73/Docs/ [retrieved on 2013-05-11]**

## Description

### TECHNICAL FIELD

The present invention relates to terminal- to-terminal (D2D) communication. More particularly, the present invention relates to a technique for adjusting a transmission time interval of a discovery signal in the terminal-to-terminal communication.

### BACKGROUND ART

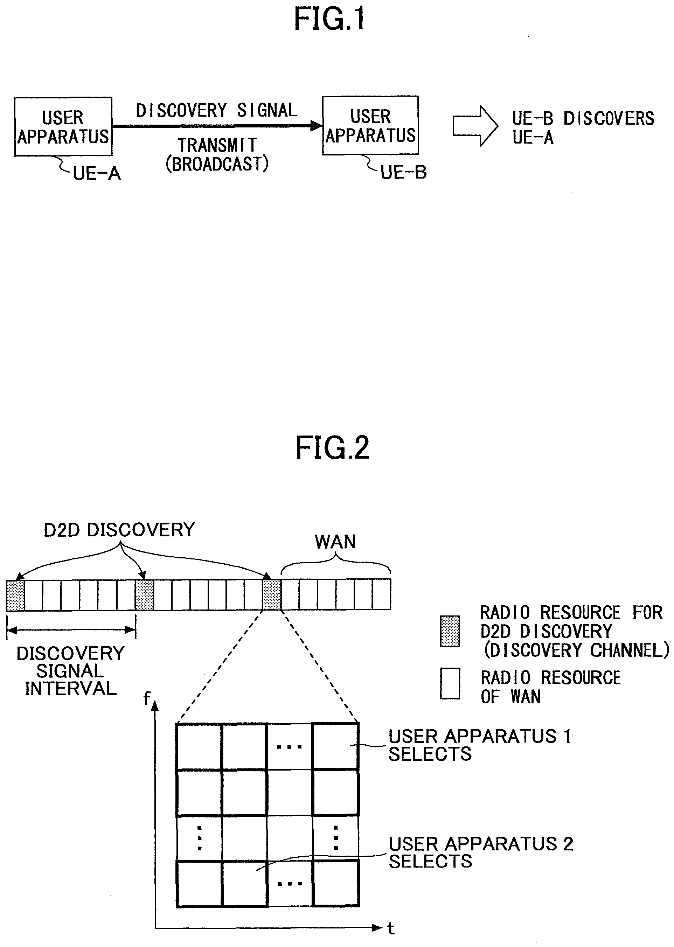

In mobile communications, it is common that a terminal (to be referred to as "user apparatus UE" hereinafter) and a base station BS performs communication so that communication is performed between user apparatuses UE. However, in recent years, various techniques are considered for performing direct communication between user apparatuses UE.
When performing communication between user apparatuses UE, it is necessary that a user apparatus UE discovers another neighboring user apparatus UE. As a method for discovering a user apparatus UE, there is a method in which each user apparatus UE transmits (broadcasts) a discovery signal including its own ID (identification information). For example, as shown in Fig. 1, a user apparatus UE-A transmits a discovery signal including identification information of itself, and when a user apparatus UE-B receives the discovery signal, the user apparatus UE-B discovers the user apparatus UE-A by determining that there is the identification information of the user apparatus UE-A in the discovery signal.

Fig. 2 is a diagram showing an example of a radio resource (to be referred to as resource hereinafter) for transmitting a discovery signal. In the example of Fig. 2, it is defined that a resource (discovery channel), for performing discovery (and being discovered) of a user apparatus UE by transmitting and receiving a discovery signal, comes periodically. As shown in Fig. 2, a time length between a period (to be referred to as discovery period) for transmitting and receiving a discovery signal and a next discovery period is called a discovery signal interval. Such a discovery channel is assigned in a radio access network (RAN), for example, so that a user apparatus UE performs transmission and reception of discovery signals by using the discovery channel at discovery signal intervals.
As shown in Fig. 2, in each discovery period, resources (each being a block of a time-frequency resource, which is to be referred to as "discovery resource") for transmitting (and receiving) a discovery signal are defined. Each user apparatus UE transmits a discovery signal by using a discovery resource in the discovery period. In Fig. 2, an example is shown in which an apparatus 1 selects a discovery resource, and an apparatus 2 selects another discovery resource. There is a patent documents 1 and 2 as prior arts related to this application.

US 2012/0191966 A1 describes a method of operating a wireless device that includes adjusting at least one duty cycle at which peer discovery signals are sent or received based on environmental information of an environment of the wireless device. In addition, the method includes sending or receiving the peer discovery signals in time based on the at least one duty cycle.

### RELATED ART DOCUMENT

[PATENT DOCUMENT]

   [PATENT DOCUMENT 1] US7984132
   [PATENT DOCUMENT 2] US8189508B2

### SUMMARY OF THE INVENTION

### PROBLEM TO BE SOLVED BY THE INVENTION

In general, distribution of user apparatuses UE is very ununiform in the space domain and in the time domain. In such a situation, each user apparatus UE that tries to be discovered by another user apparatus UE arbitrarily selects a discovery resource for transmitting a discovery resource.

However, in a hot spot such as a station of a railway and the like, for example, there is a possibility that a discovery channel that is assigned statically or semi-statically cannot accommodate many user apparatuses UE. In such a case, there is a possibility that some user apparatuses UE select the same discovery resource. That is, there is a fear that, when the density of the user apparatuses UE is very high, interference occurs between discovery signals so that congestion may occur.

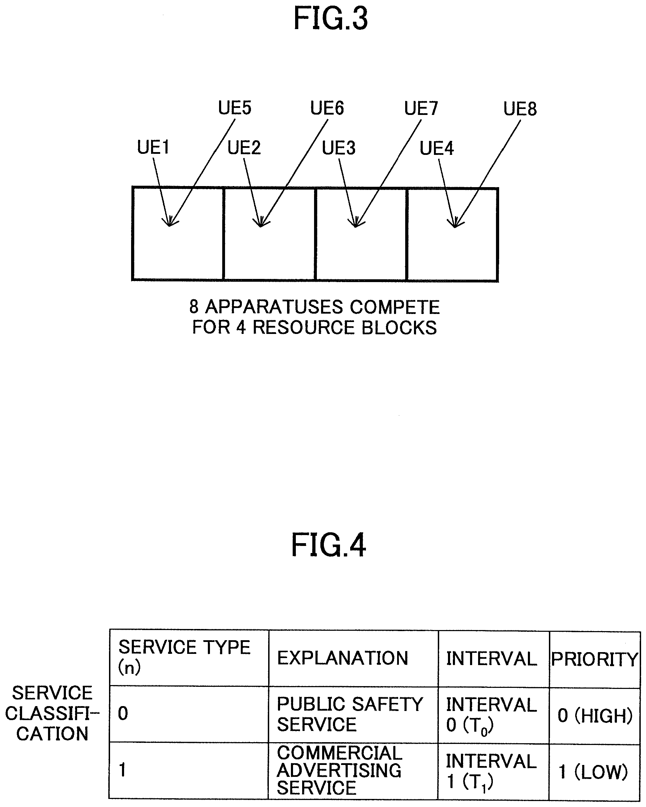

For example, as shown in Fig. 3, in a situation where there are eight user apparatuses UE, when there are only four discovery resources, the eight user apparatuses UE compete for the four discovery resources. Thus, congestion occurs.

As mentioned above, in a case where many user apparatuses UE perform transmission of discovery signals in limited resources, there is a fear that congestion may occur in a discovery channel.

The present invention is contrived in view of the above-mentioned points, and an object of the present invention is to provide a technique for reducing congestion that occurs due to lack of resources for discovery signal transmission in terminal-to-terminal (D2D) communication.

### MEANS FOR SOLVING THE PROBLEM

The present invention provides a user apparatus and a D2D signal interval adjusting method as set out in the attached claims.

EFFECT OF THE PRESENT INVENTION

According to the present invention, a technique is provided for reducing congestion that occurs due to lack of resources for discovery signal transmission in terminal-to-terminal communication.

BRIEF DESCRIPTION OF THE DRAWINGS

Fig. 1 is a diagram for explaining a technique for discovering a user apparatus UE in terminal-to-terminal communication;
Fig. 2 is a diagram showing an example of discovery resources;
Fig. 3 is a diagram for explaining a problem;
Fig. 4 is a diagram for explaining outline of an embodiment of the present invention;
Fig. 5 is a diagram for explaining outline of an embodiment of the present invention;
Fig. 6 is a diagram showing a mobile communication system of a first embodiment;
Fig. 7 is a diagram showing a process procedure between a user apparatus UE and a base station BS;
Fig. 8 is a diagram for explaining message 1;
Fig. 9 is a diagram showing an example of message 1;
Fig. 10 is a diagram for explaining message 2;
Fig. 11 is a diagram showing a concrete example of adjustment factor k in option 1;
Fig. 12 is a diagram showing a concrete example of option 2;
Fig. 13 is a diagram showing a concrete example of option 3;
Fig. 14 is a diagram showing service type examples and examples of mapping functions;
Fig. 15 is a diagram showing a process procedure example of a user apparatus in step 2 when using $N_{cb}$;
Fig. 16 is a diagram showing a process procedure example of a user apparatus in step 2 when using $E_m$;
Fig. 17 is a diagram showing a monitoring method 1 of resource utilization status of a discovery channel by the base station BS;
Fig. 18 is a diagram showing a monitoring method 2 of resource utilization status of a discovery channel by the base station BS;
Fig. 19 is a diagram showing an example of determining a resource utilization level and an adjustment factor k by the base station BS;
Fig. 20 is a flowchart showing a process procedure of steps 4-6;
Fig. 21 is a flowchart showing a procedure of discovery period control in the base station BS;
Fig. 22 is a flowchart showing a process procedure of a user apparatus in step 7;
Fig. 23 is a diagram showing a concrete example in a first embodiment;
Fig. 24 is a diagram showing a concrete example in the first embodiment;
Fig. 25 is a functional block diagram of a user apparatus UE in the first embodiment;
Fig. 26 is a functional block diagram of a base station BS in the first embodiment;
Fig. 27 is a diagram showing an outline of an embodiment 2-1;
Fig. 28 is a diagram showing a process outline between a user apparatus UE-1 and a user apparatus UE-2 in the embodiment 2-1;
Fig. 29 is a flowchart showing operation of a user apparatus in the embodiment 2-1;
Fig. 30 is a functional block diagram of a user apparatus UE in the embodiment 2-1;
Fig. 31 is a diagram showing an outline of an embodiment 2-2;
Fig. 32 is a diagram showing a process outline between a user apparatus UE-1 and a user apparatus UE-2 in the embodiment 2-2;
Fig. 33 is a diagram showing an example of an interval indicator;
Fig. 34 is a flowchart showing operation of a user apparatus in the embodiment 2-2;
Fig. 35 is a functional block diagram of a user apparatus UE in the embodiment 2-2.

EMBODIMENTS FOR CARRYING OUT THE INVENTION

In the following, embodiments of the present invention are described with reference to figures. The embodiments described below are merely examples, and the embodiments to which the present invention is applied are not limited to the embodiments below.

(Outline of embodiment)

First, an outline of an embodiment of the present invention is described. In the present embodiment, basically, a discovery signal interval is controlled according to a resource utilization status (resource utilization) and a service type (service type) in the user apparatus UE.

That is, in the present embodiment, as a premise, a priority is determined according to a service type. So, a user apparatus UE corresponding to a service of a low priority is considered to endure longer delay compared to a user apparatus UE corresponding to a service of a high priority, and is considered to be able to increase the discovery signal interval. So, control is performed so as to, when congestion occurs, increase the length of the discovery signal interval in the user apparatus UE corresponding to a low priority service. Basic process content is as follows.

First, each user apparatus UE sets a basic discovery signal interval according to a service type. Here, each service type is associated with a priority. In general, priority is different between different types of services.

A user apparatus UE or a base station BS evaluates resource utilization status, and transmits a control message. Then, a user apparatus UE that receives the control message adjusts a discovery signal interval according to the resource utilization status and a service type. In the present embodiment, for example, in a congestion state, the discovery signal interval increases, and, when in a low utilization state (under-utilization), control is performed such that the discovery signal interval is reset to a basic discovery signal interval.

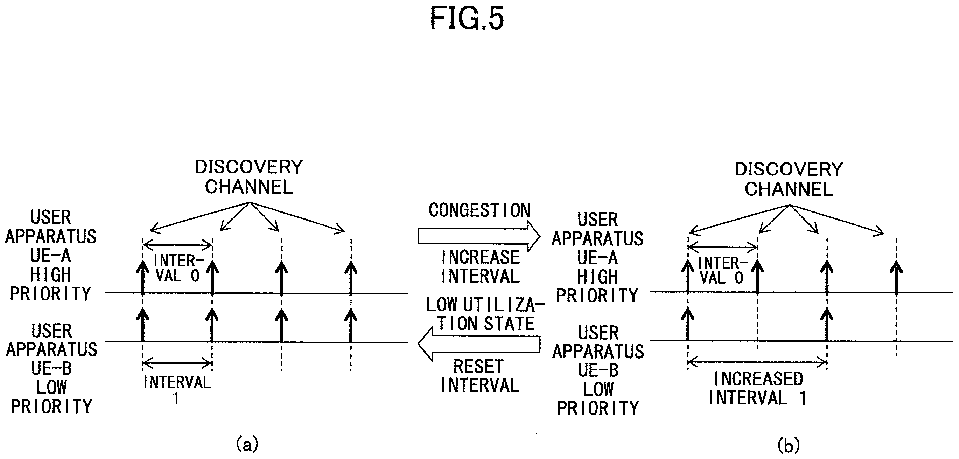

An example of such a control is described with reference to Fig. 4 and Fig. 5. In this example, services are classified as shown in Fig. 4. That is, as service types (0, 1), two services are defined, which are a public safety service and a commercial advertising service. As shown in Fig. 4, a discovery signal interval and a priority are associated with each of the services.

In this case, as shown in Fig. 5(a), in an initial state, a user apparatus UE-A of high priority whose service type is 0 and a user apparatus UE-B of low priority whose service type is 1 are transmitting a discovery signal at the same intervals (basic discovery signal intervals). When the state enters a congestion state, as shown in Fig. 5(b), the discovery signal interval for the user apparatus UE-B of the low priority is increased. After that, for example, when the state becomes a low utilization state, the discovery signal interval is reset, so that the state returns to the state of Fig. 5(a). By performing the above-mentioned control, it becomes possible to resolve the congestion state by suppressing discovery signal transmission in user apparatuses UE of low priority.

In the following, as more concrete embodiments, a first embodiment and a second embodiment are described.

The first embodiment is an embodiment in which a base station BS (cellular network) performs control for adjusting discovery signal intervals. The second embodiment is an embodiment in which control is performed by transmitting and receiving control information between user apparatuses UE, and the second embodiment is divided into an embodiment 2-1 and an embodiment 2-2. In the embodiment 2-1, the user apparatus UE includes an adjustment request into a discovery signal, and transmits the discovery signal. In the embodiment 2-2, the user apparatus UE includes a current discovery signal interval of the user apparatus UE into a discovery signal, and transmits the discovery signal.

(First embodiment)

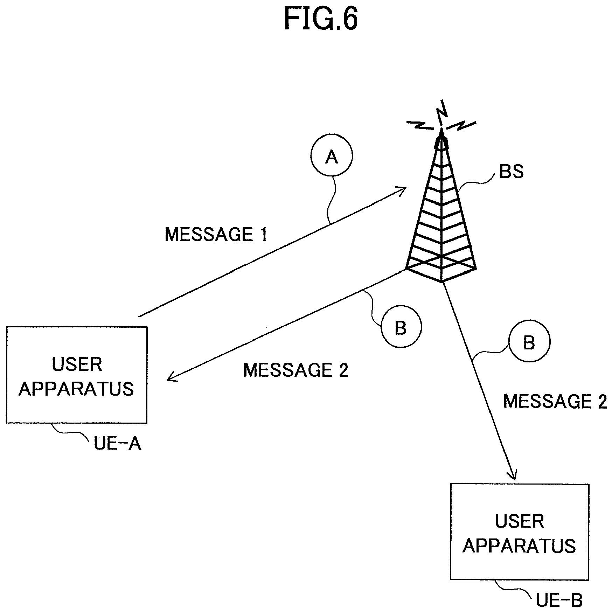

In the following, the first embodiment is described. The system of the present embodiment is a mobile communication system including a base station BS and user apparatuses UE as shown in Fig. 6. In the present embodiment, although it is assumed that the mobile communication system is a system complying with LTE, the present invention is not limited to LTE, and the present invention can be carried out irrespective of the schemes.

Fig. 6 shows, as an example, a user apparatus UE-A which is in an RRC_CONNECTED state and is connected to the base station BS, and a user apparatus UE-B which is in an idle state (RRC_IDLE).

As shown in Fig. 6, the user apparatus UE-A transmits information (message 1) indicating a resource utilization status to the base station BS (step A). The message 1 may be transmitted using an existing channel such as PUCCH, for example, or may be transmitted by defining a new channel.

Then, the base station BS generates a control signal based on the information received in step A, and broadcasts the control signal (message 2) to each user apparatus UE. Although the message 2 can be transmitted as a SIB, for example, it is not limited to SIB, and the message 2 may be transmitted using any channel.

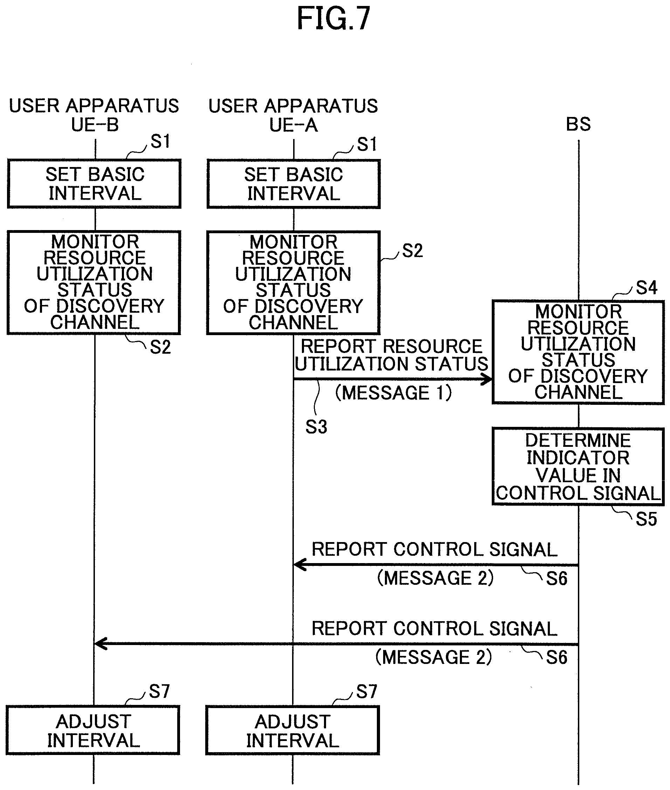

Fig. 7 is a diagram showing a process procedure example of each use apparatus UE and the base station BS shown in Fig. 6. As shown in Fig. 7, first, each user apparatus UE sets a basic interval (step 1). Then, each user apparatus UE obtains (monitors) resource utilization status of the discovery channel (step 2).

Next, the user apparatus UE-A reports, to the base station BS, information indicating the resource utilization status (resource utilization) as the before-mentioned message 1 (step 3).

By receiving the message 1 in step 3 and the like, the base station BS obtains the resource utilization status of the discovery channel (step 4), and determines a value of an indicator in the control signal based on the resource utilization status (step 5). Then, the base station BS broadcasts the control signal (message 2) including the indicator value determined in step 5 to each user apparatus (step 6). Each user apparatus that receives the message 2 adjusts the discovery signal interval according to the indicator value indicated by the message 2.

In the following, content of each message and content of each step are described in more detail.

<Message 1: resource utilization status report transmitted from user apparatus UE>

First, the message 1 transmitted from the user apparatus UE to the base station BS in step 3 of Fig. 7 is described in more detail.

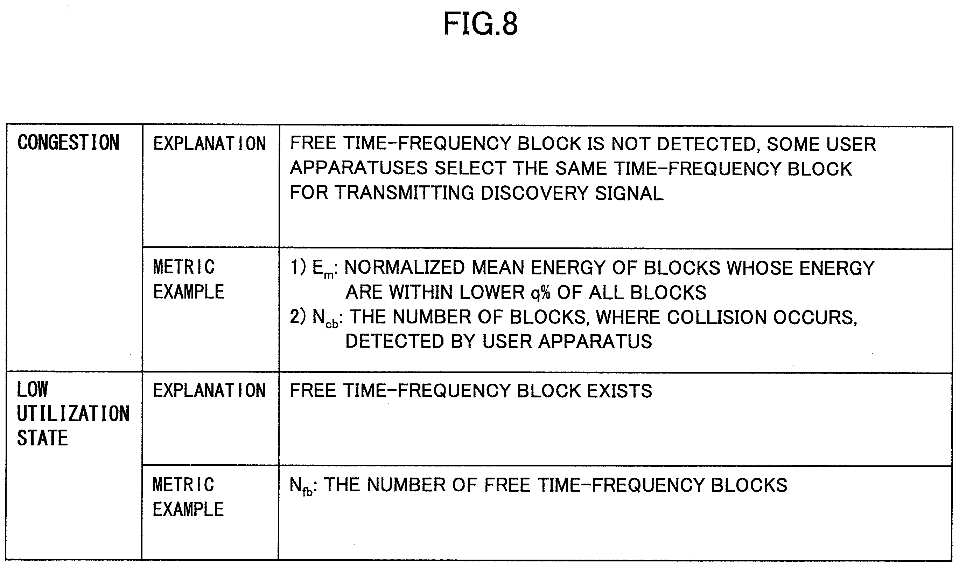

The message 1 includes an information element indicating a resource utilization status of a discovery channel. In the present embodiment, as the resource utilization status to be included in the message 1, there are two types of resource utilization statuses, which are a congestion state and a low utilization state as shown in Fig. 8.

In the congestion state, for example, a free time-frequency block is not detected, so that several user apparatuses UE select the same time-frequency block for transmitting a discovery signal. As metrics (measurement criteria) in the congestion state, there are $E_m$ and $N_{cb}$ as shown in Fig. 8. $E_m$ is the normalized mean energy of blocks whose energy (field intensity, received power and the like) is within lower q% of all blocks to be measured. $N_{cb}$ is the number of blocks, where collision occurs, detected by the user apparatus UE.

In the low utilization state, there are free time - frequency blocks. In the present embodiment, as a metric (measurement criterion) in the low utilization state, $N_{fb}$ is used. $N_{fb}$ indicates the number of free time - frequency blocks.

The above-mentioned block is, for example, a before-mentioned discovery resource. Also, each of the measurement values may be a value of one time discovery period, or may be a value in a plurality of times of discovery periods.

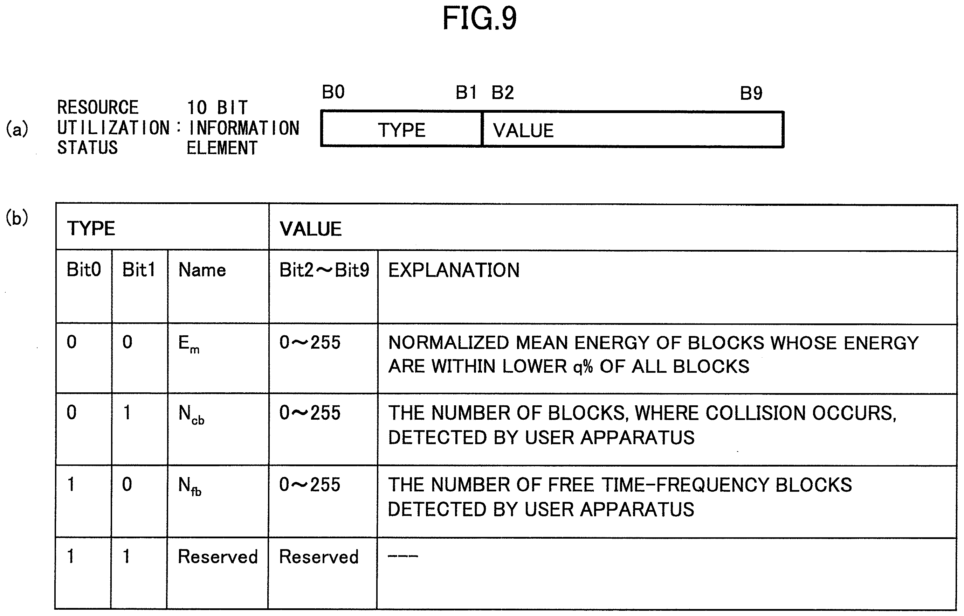

As shown in Fig. 9(a), the resource utilization status is defined as an information element of 10 bits, for example, and values are set as shown in Fig. 9(b), for example.

In the present embodiment, transmission of the message 1 is performed based on a condition as a a trigger. The condition is, for example, that the user apparatus UE detects the congestion state (congestion event), or that the user apparatus UE detects the low utilization state (low utilization state event).

<Message 2: Control signal broadcasted from base station BS>

The message 2 includes one indicator or a plurality of indicators, and is used by the base station BS to control adjustment of discovery signal intervals in the user apparatus UE. Control, performed by the base station BS, on adjustment of discovery signal intervals can be called control signaling.

In the present embodiment, as the indicator to be included in the message 2, an adjustment factor k (adjustment factor : k) and a service type are used.

The adjustment factor k is a factor determined by the base station BS according to the resource utilization status. Each k corresponds to one type of resource utilization level. The larger k is, the higher the congestion level is, so the k indicates the larger discovery signal interval. Each user apparatus UE adjusts the discovery signal interval according to k.

The service type is used in combination with the adjustment factor k, and indicates a service type which is a target for which the base station BS adjusts the discovery signal interval.

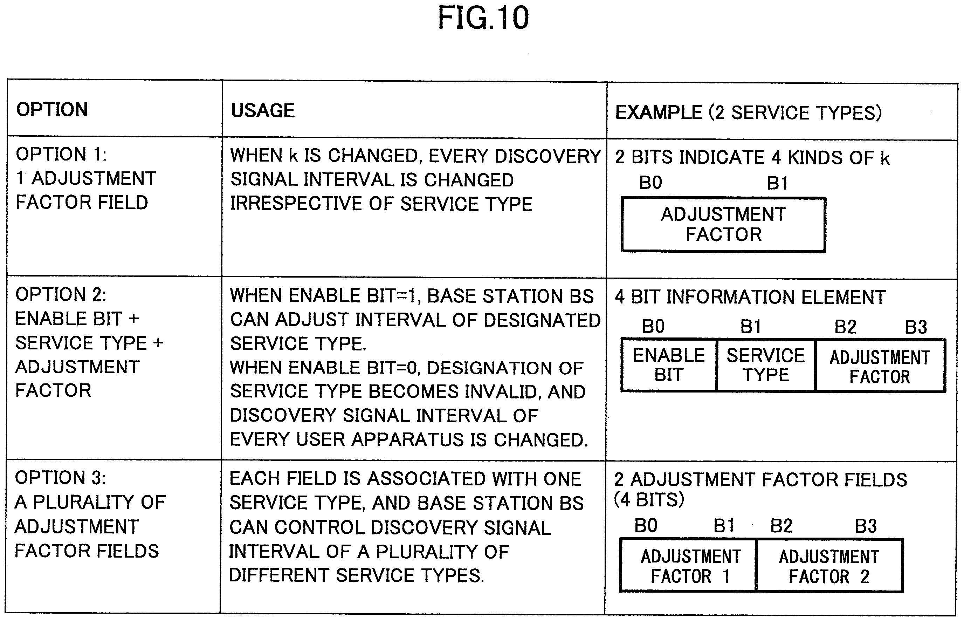

Fig. 10 shows options 1-3 of methods of combining the indicators in the message 2. Fig. 10 shows an example of a case in which the number of the service types is two.

As shown in Fig. 10, the message 2 in option 1 includes one adjustment factor field of 2 bits. 4 types of k can be represented by 2 bits. In option 1, for example, when k is changed, discovery signal intervals of all user apparatuses UE are changed irrespective of the service type.

The message 2 in option 2 includes an enable bit, a service type, and an adjustment factor. In option 2, when the enable bit =1, the base station BS can adjust an interval of a specified service type. When the enable bit =0, designation of the service type becomes invalid, so that discovery signal intervals of all user apparatuses are changed.

The message 2 in option 3 includes a plurality of adjustment factor fields. In option 3, each field is associated with one service type, and the base station BS can control the discovery signal interval of each of a plurality of different service types.

A concrete example of each option is described as follows. Also in the following examples, the number of the service types is two.

(1) Example of option 1

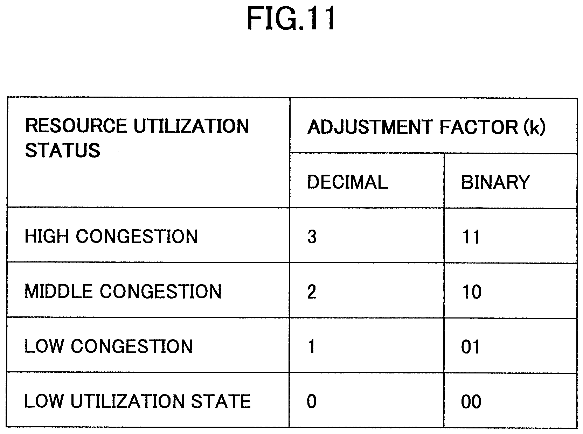

Fig. 11 shows a concrete example of an adjustment factor k in the option 1. As shown in Fig. 11, since the adjustment factor k is represented by 2 bits, resource utilization levels of 4 types can be represented according to the value of k. Here, k=0(low utilization state) means to reset the discovery signal interval in the user apparatus UE into a basic interval.

(2) Example of option 2

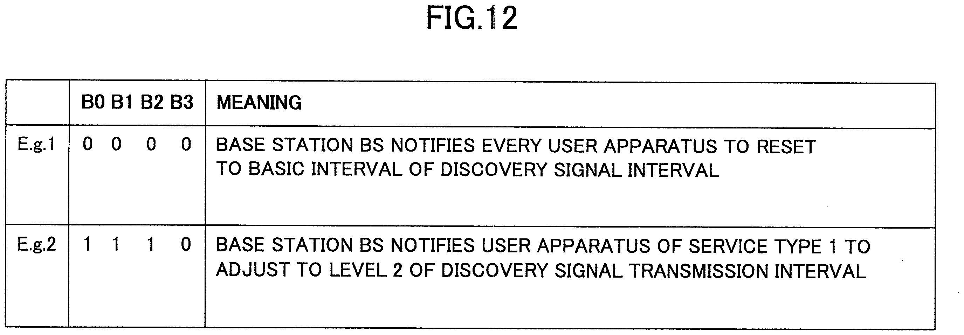

Fig. 12 shows a concrete example of option 2. Meaning of the field of the adjustment factor k is the same as that in option 1, and it is as shown in Fig. 11. In an example 1 shown in Fig. 12, the enable bit is 0, the service type is 0, and the adjustment factor k is 0, which means that the base station BS instructs all user apparatuses UE to reset the discovery signal interval to the basic interval.

In the example 2, since the enable bit is 1, the service type is 1, and the adjustment factor k is 2, the example 2 means that the base station BS instructs user apparatuses UE of the service type 1 to adjust the discovery signal transmission interval to level 2.

(3) Example of option 3

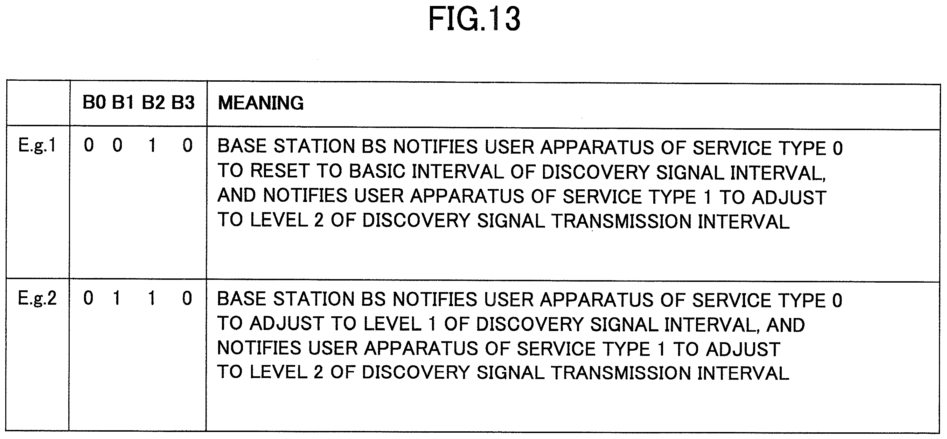

Fig. 13 shows a concrete example of option 3. In this example, the adjustment factor field 1 (B0, B1) is associated with the service type 0, the adjustment factor field 2 (B2, B3) is associated with the service type 1.

In the example 1 shown in Fig. 13, the adjustment factor of the service type 0 is 0, and the adjustment factor of the service type 1 is 2. Thus, the base station BS instructs user apparatuses UE of the service type 0 to reset the discovery signal interval to the basic interval, and instructs user apparatuses UE of the service type 1 to adjust the discovery signal interval to level 2.

In the example 2 shown in Fig. 13, the adjustment factor of the service type 0 is 1, and the adjustment factor of the service type 1 is 2. Thus, the base station BS instructs user apparatuses UE of the service type 0 to adjust the discovery signal interval to level 1, and instructs user apparatuses UE of the service type 1 to adjust the discovery signal interval to level 2.

In the following, processes of each step shown in Fig. 7 are described in more detail.

<Step 1 of Fig. 7: Setting of basic discovery signal interval>

In step 1, first, the user apparatus UE sets a basic discovery signal interval according to a service type that is requested or offered. In the present embodiment, a priority is assigned to each service type. For example, the higher the priority is, the shorter the discovery signal interval is.

As shown in the following equation, the discovery signal interval $T_n$ is represented as a function (mapping function) of a service type n, an adjustment factor k, and a minimum interval $T_m$. The user apparatus UE stores information corresponding to the equation in a storage unit, and includes a function of calculating $T_n$ from n and k.

$$T_n = f(n, k) * T_m$$

In the above-mentioned equation, $T_n$ indicates a discovery signal interval in the service type n, k indicates an adjustment factor, and $T_m$ indicates a minimum discovery signal interval in the system. In the setting of the basic discovery signal interval in step 1, k=0.

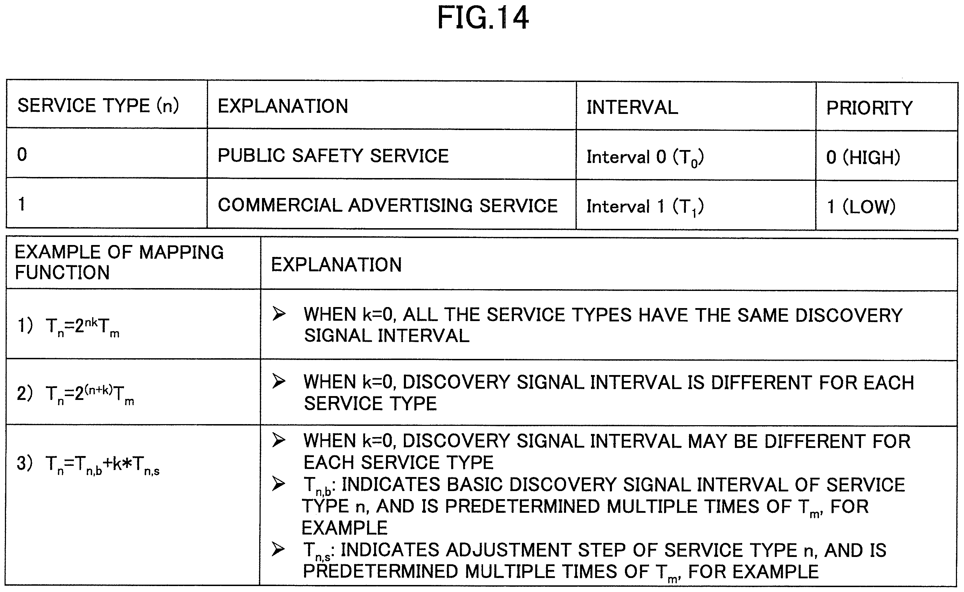

Fig. 14 shows service type examples and examples of mapping functions. The examples of the service types are the same as the examples shown in Fig. 4. In the example 1 ($T_n = 2^{nk} T_m$) of the mapping function shown in Fig. 14, when k=0, $T_n = T_m$ becomes true, so that user apparatuses UE of all service types have the same discovery signal interval. In the example 2 of the mapping function ($T_n = 2^{(n+k)} T_m$), when k=0, the discovery signal interval is different for each service type.

In the example 3 of the mapping function ($T_n = T_{n,b} + k * T_{n,s}$), $T_{n,b}$ indicates a basic discovery signal interval of a service type n, and is a number of a predetermined number of times of $T_m$, for example. $T_{n,s}$ indicates an adjusting step in the service type n, and is a number of a predetermined number of times of $T_m$, for example. In the example 3, when k=0, the discovery signal interval may be different for each service type.

<Step 2 in Fig. 7: Monitoring of discovery channel by user apparatus UE>

In step 2, each user apparatus UE monitors a discovery channel, obtains a value indicating a resource utilization status, and determines whether to notify of the value based on the value. In this example, when the congestion state or the low utilization state is detected, a process of notification of resource utilization status is triggered. The process for obtaining the value indicating the resource utilization status and the notification may be performed for each discovery period, may be performed at predetermined time intervals, or may be performed every predetermined multiple times of discovery periods. The method is not limited to a particular method.

(1) Detection of congestion state

The congestion state is evaluated by criteria such as the number (Example 1 : $N_{cb}$) of collision blocks detected by the user apparatus, average energy of predetermined blocks (Example 2: $E_m$) and the like, for example.

In the case of the above-mentioned example 1 ($N_{cb}$), the trigger condition is represented as $N_{cb} \geqq N_{th}$ by using a predetermined threshold $N_{th}$.

$E_m$ in the example 2, as described before, is a normalized mean energy of blocks whose energy (field intensity, received power and the like) is within lower q% of all blocks. In the case of example 2, the trigger condition is represented as $E_m \geqq E_{th}$ by using a predetermined threshold $E_{th}$.

(2) Detection of low utilization state

The low utilization state is evaluated by criteria such as the number of free time-frequency blocks. Assuming that the number of the free time-frequency blocks is $N_{fb}$, the trigger condition is represented as $N_{fb} \geqq N_{fth}$ by using a predetermined threshold $N_{fth}$. That is, when $N_{fb} \geqq N_{fth}$ is satisfied, the state is determined to become the low utilization state (a low utilization event occurs).

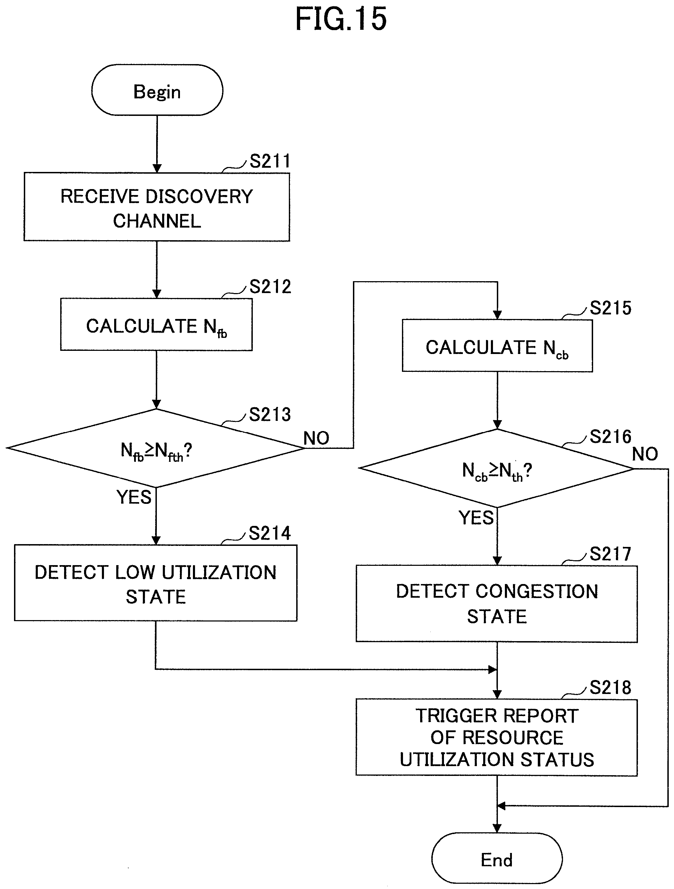

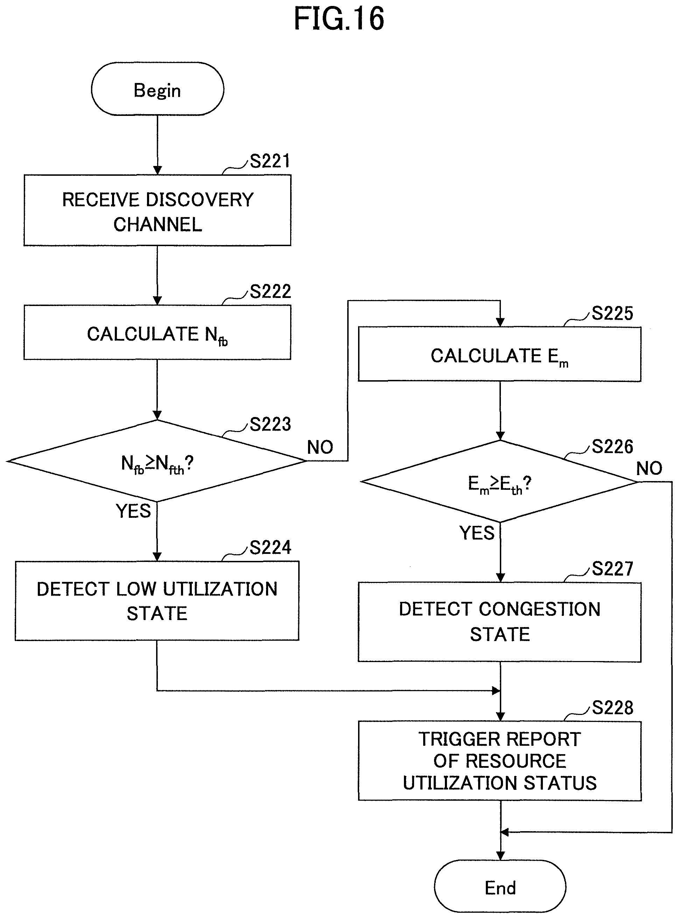

Fig. 15 shows a process procedure example of the user apparatus UE in step 2 in the case of using $N_{cb}$, Fig. 16 shows a process procedure example of the user apparatus UE in step 2 in the case of using $E_m$.

In Fig. 15, the user apparatus UE receives (listens) a discovery channel (step 211), and calculates $N_{fb}$ (step 212). The user apparatus UE determines whether $N_{fb} \geqq N_{fth}$ is satisfied (step 213) . When the determination result is Yes, the process goes to step 214, and when the determination result is No, the process goes to step 215.

In step 214, the user apparatus UE determines that the state becomes a low utilization state (a low utilization state event occurs), so that the user apparatus UE triggers notification of resource utilization status (step 218). $N_{fb}$ is included in the resource utilization status transmitted after that.

In step 215, the user apparatus calculates $N_{cb}$ to determine whether $N_{cb} \geqq N_{th}$ is satisfied (step 216). When the determination result is Yes, the process goes to step 217, and when the determination result is No, the process ends.

In step 217, the user apparatus UE determines that the state becomes the congestion state (congestion state event occurs), and triggers resource utilization status notification (step 218). The resource utilization status transmitted after that includes $N_{cb}$.

In the example of Fig. 16, the user apparatus UE receives (listens) a discovery channel (step 221), and calculate $N_{fb}$ (step 222). The user apparatus UE determines whether $N_{fb} \geqq N_{fth}$ is satisfied (step 223). When the determination result is Yes, the process goes to step 224, and when the determination result is No, the process goes to step 225.

In step 224, the user apparatus UE determines that the state becomes a low utilization state (a low utilization state event occurs), so that the user apparatus UE triggers notification of resource utilization status (step 228). $N_{fb}$ is included in the resource utilization status transmitted after that.

In step 225, the user apparatus UE calculates $E_m$ to determine whether $E_m \geqq E_{th}$ is satisfied (step 226). When the determination result is Yes, the process goes to step 227, and when the determination result is No, the process ends.

In step 227, the user apparatus UE determines that the state becomes the congestion state (congestion state event occurs), and triggers resource utilization status notification (step 228). The resource utilization status transmitted after that includes $E_m$.

<Step 3 of Fig. 7>

In step 3, the user apparatus UE transmits a message 1 (example: Fig. 9) including a resource utilization status to the base station BS.

<Step 4 of Fig. 7>

In step 4, the base station BS monitors resource utilization status of the discovery channel. In the present embodiment, there are following two methods as methods for monitoring the resource utilization status of the discovery channel by the base station BS.

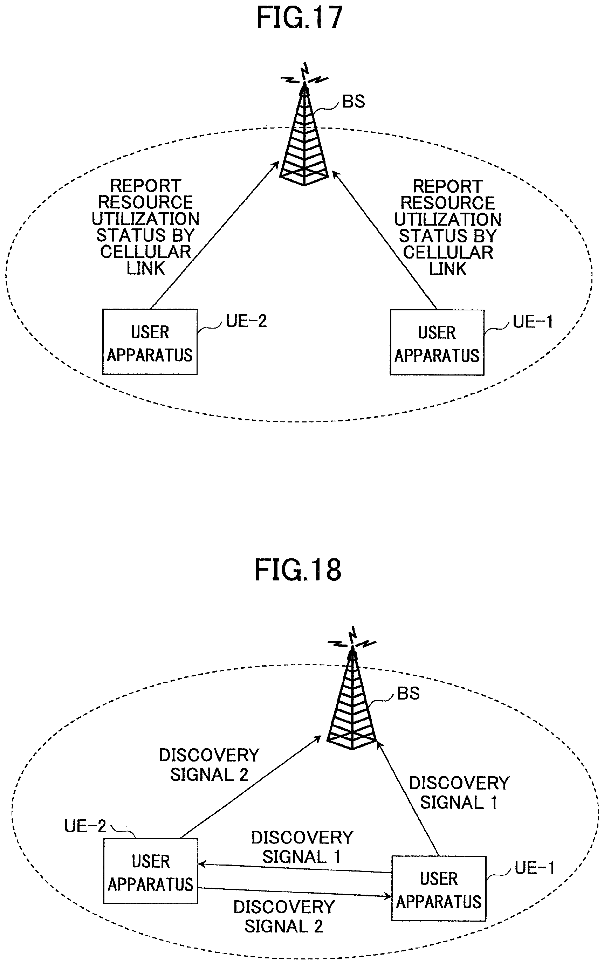

Method 1) Fig. 17 shows method 1. In the method 1, the base station BS collects values ($N_{cb}$, $E_m$, $N_{fb}$, etc.) of resource utilization status included in the message 1 that is received from one or a plurality of user apparatuses UE in step 3 so as to ascertain the resource utilization status of the discovery channel. As described before, the message 1 is transmitted from a connected user apparatus UE (in an RRC_CONNECTED state) by using an existing channel (PUCCH and the like) or a newly defined channel.

Method 2) In addition to the information shown in Fig. 17, as shown in Fig. 18, the base station BS receives discovery signals transmitted from each user apparatus UE. The base station BS may calculate values such as $N_{cb}$, $E_m$, $N_{fb}$ based on the discovery signals received from the user apparatuses UE. However, since transmission power of the discovery signal is limited, there is a possibility in that the base station BS cannot receive a part of or all of the discovery signals. In such a case, values of $N_{cb}$, $E_m$, $N_{fb}$ and the like can be grasped from reports received in the method 1. Also, when the base station BS receives neither the notification of the method 1 nor the discovery signals in the method 2, it is not necessary that the base station BS calculates the values of $N_{cb}$, $E_m$, $N_{fb}$ and the like.

<Step 5 of Fig. 7>

In step 5, the base station BS determines a value of the indicator to be included in the control signal in the control signaling. Here, the adjustment factor k in the message 2 and a service type of control target are mainly determined based on a resource utilization level determined from $N_{cb}$, $E_m$, $N_{fb}$ and the like obtained in step 4.

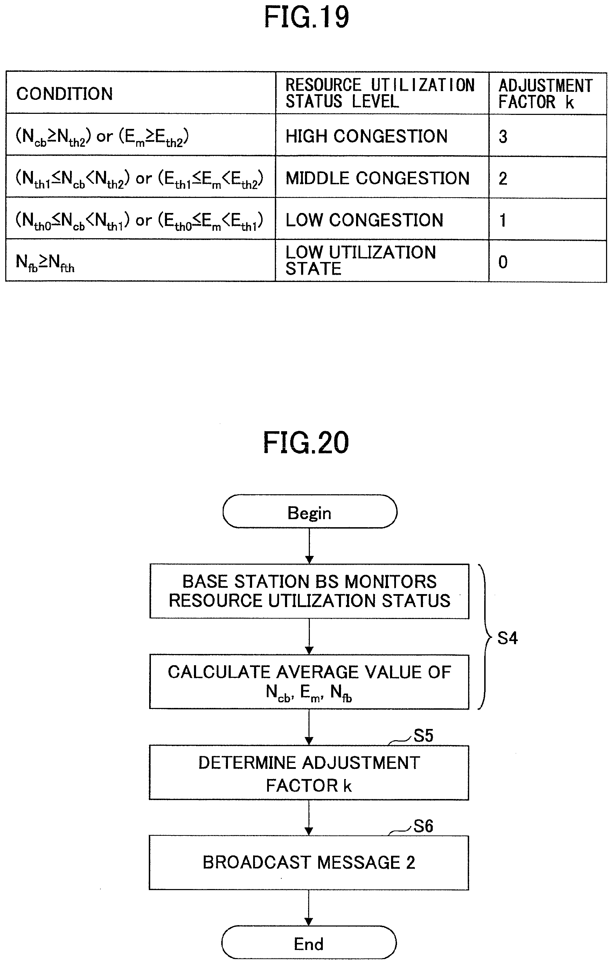

Fig. 19 shows an example for determining a resource utilization level and an adjustment factor k by the base station BS. As shown in Fig. 19, based on comparison between $N_{cb}$, $E_m$, $N_{fb}$ and predetermined thresholds, the base station BS determines the resource utilization level (high congestion, middle congestion, low congestion, low utilization state), and a corresponding value of adjustment factor k. In Fig. 19, each of $N_{th0}$, $N_{th1}$, $N_{th2}$, $N_{fth}$, $E_{th0}$, $E_{th1}$, $E_{th2}$ is a threshold predetermined according to the number of resources assigned for discovery, and is stored in a storage unit of the base station BS beforehand. By the way, $N_{th0}$ may be replaced with $N_{th}$ shown in Fig. 15 and Fig. 16. Also, correspondence information shown in Fig. 19 is also stored in the storage unit of the base station BS beforehand. As an example, when the base station BS determines $N_{th1} \leqq N_{cb} < N_{th2}$, the base station BS determines that the resource utilization level is middle congestion, so the adjustment factor is determined to be 2. Also, for example, as a control target, a service type whose priority is not high is selected.

<Step 6 of Fig. 7>

In step 6, the base station BS performs control signaling for broadcasting the message 2 (example: Fig. 10 etc.) including the indicator value determined in step 5 to each user apparatus UE by using SIB, for example.

<Process procedure on steps 4-6 of Fig. 7>

Fig. 20 shows a flowchart showing process procedure of steps 4-6 in the base station BS more concretely. As shown in Fig. 20, the base station BS monitors resource utilization status so as to calculate an average value of each of $N_{cb}$, $E_m$ and $N_{fb}$ (step 4). This average value can be, for example, calculated by adding a number of resource utilization status values that are received for a predetermined period, and dividing the added values by the number.

The base station BS determines an adjustment factor k by using a determination method shown in Fig. 19, for example (step 5), and further, selects a service type of a control target so as to broadcast the message 2 including these (step 6).

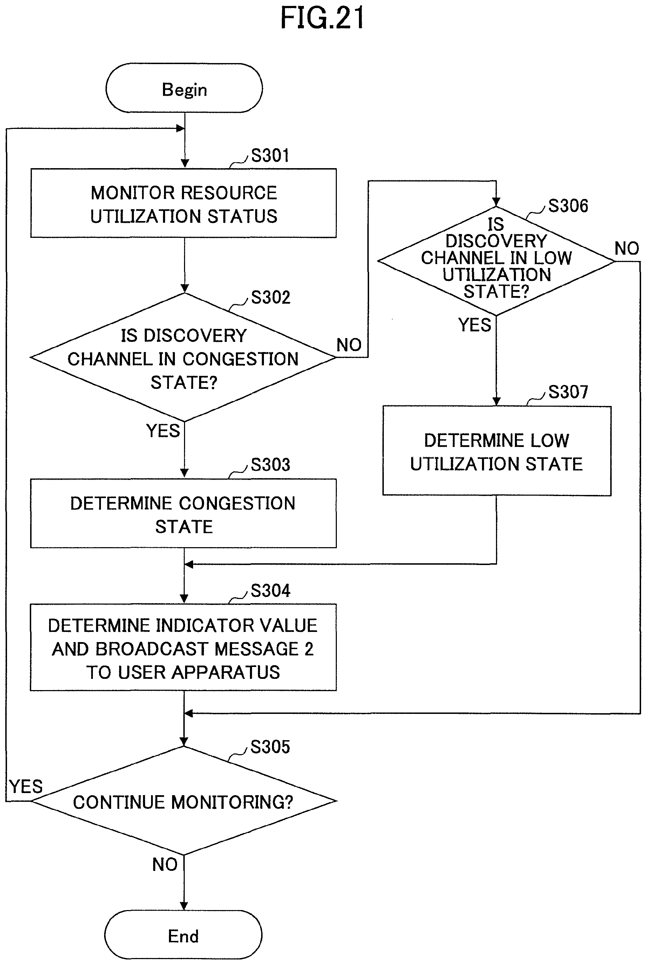

Fig. 21 is a flowchart showing the procedure of discovery signal interval control by the base station BS in more detail. An operation example of the base station BS is described by referring to Fig. 21.

The base station BS monitors resource utilization status (step 301), and determines whether the discovery channel is in a congestion state (example: whether to be equal to or greater than "low congestion") by using the determination method shown in Fig. 19, for example (step 302). When the determination here is Yes, the process goes to step 303, and when the determination here is No, the process goes to step 306.

In step 303, it is determined that the state is the congestion state. Then the base station BS determines an indicator value (adjustment factor and the like), and broadcasts the message 2 to user apparatuses UE (step 304). When the base station BS continues to monitor resource utilization status, the process goes to step 301, and when the base station BS does not continue, the process ends (step 305).

In step 306, the base station BS determines whether the discovery channel is in a low utilization state by using a determination method shown in Fig. 19, for example. When the determination here is Yes, the process goes to step 307, and when the determination here is No, the process goes to step 305. In step 307, the base station BS determines that the state is the low utilization state, and determines an indicator value (adjustment factor and the like), and broadcasts the message 2 to user apparatuses UE (step 304).

<Step 7 of Fig. 7: adjustment of discovery signal interval of user apparatus UE>

In step 7, each user apparatus UE receives (listens) the message 2, and performs adjustment of discovery signal interval according to content of the message 2.

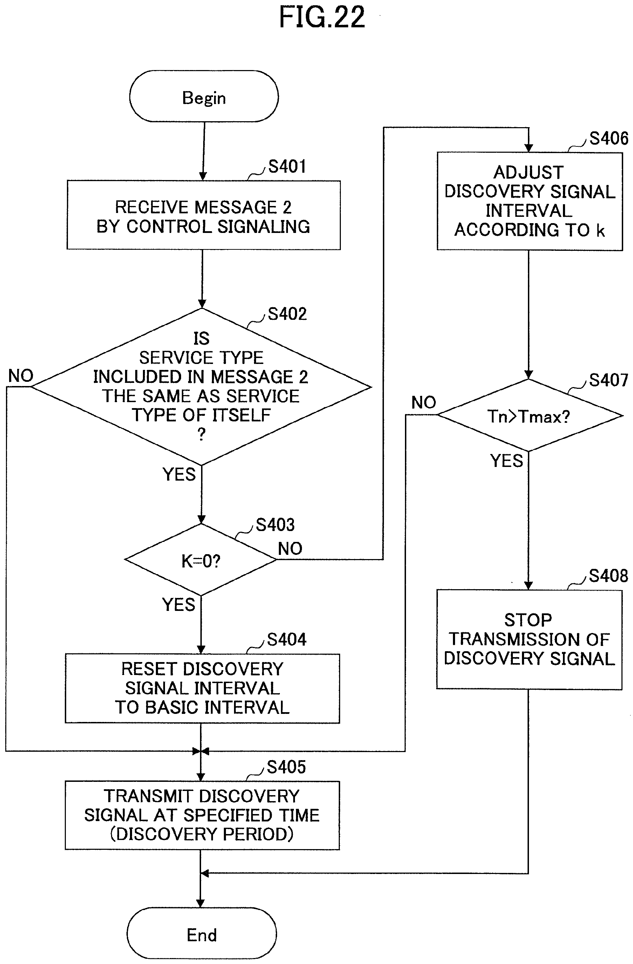

Process content of the user apparatus UE in step 7 is described with reference to the flowchart of Fig. 22.

The user apparatus UE receives the message 2 by control signaling from the base station BS (step 401). The user apparatus UE determines whether a service type included in the message 2 is the same as a service type of the user apparatus UE itself (step 402). When determination of this step is Yes, the process goes to step 403, and when determination of this step is No, the process goes to step 405. When the message 2 only includes the adjustment factor (in the case of the before-mentioned option 1), since all service types (all user apparatuses UE) are control targets, the user apparatus UE determines that they are the same in step 402. Accordingly, by performing control based on matching determination of service types (that is, priority), it becomes possible to perform discovery signal interval adjustment only for user apparatuses UE of a particular service type (example: low priority).

In step 403, the user apparatus UE determines whether the adjustment factor k is 0. When the determination in step 403 is Yes, the process goes to step 404, and when No, the process goes to step 406.

In step 404 (when k=0), the user apparatus UE resets the discovery signal interval to a basic interval. Next, the user apparatus UE transmits a discovery signal at predetermined time (discovery period) (step 405).

In step 406 (when k is not 0), the user apparatus UE adjusts the discovery signal interval according to k.

In the present embodiment, as for the discovery signal interval $T_n$ for each service type, a maximum value $T_{max}$ and a minimum value $T_{min}$ are defined, and they are stored in the user apparatus UE. That is, there is a relationship of $T_{min} \leqq T_n \leqq T_{max}$. As for a "k", when $T_n > T_{max}$, the user apparatus UE stops discovery signal transmission for the type of service. By the way, $T_{min}$ can be set as before-mentioned $T_m$.

In step 407 of Fig. 22, the user apparatus UE determines whether $T_n > T_{max}$ is true. When the determination in step 407 is Yes, the process goes to step 408, so that transmission of discovery signal is stopped. When the determination in step 407 is No, the process goes to step 405 so as to perform discovery signal transmission.

<Concrete example>

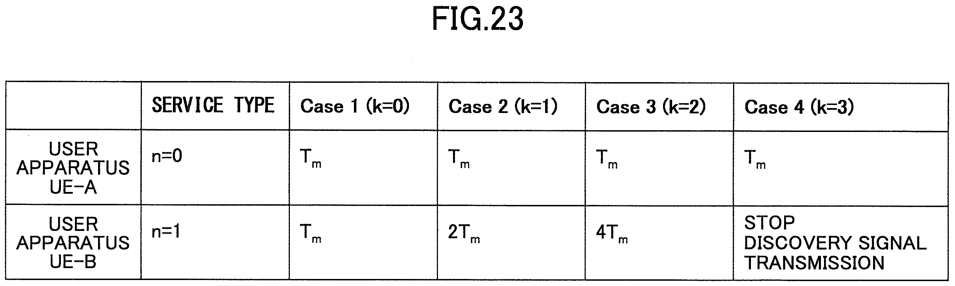

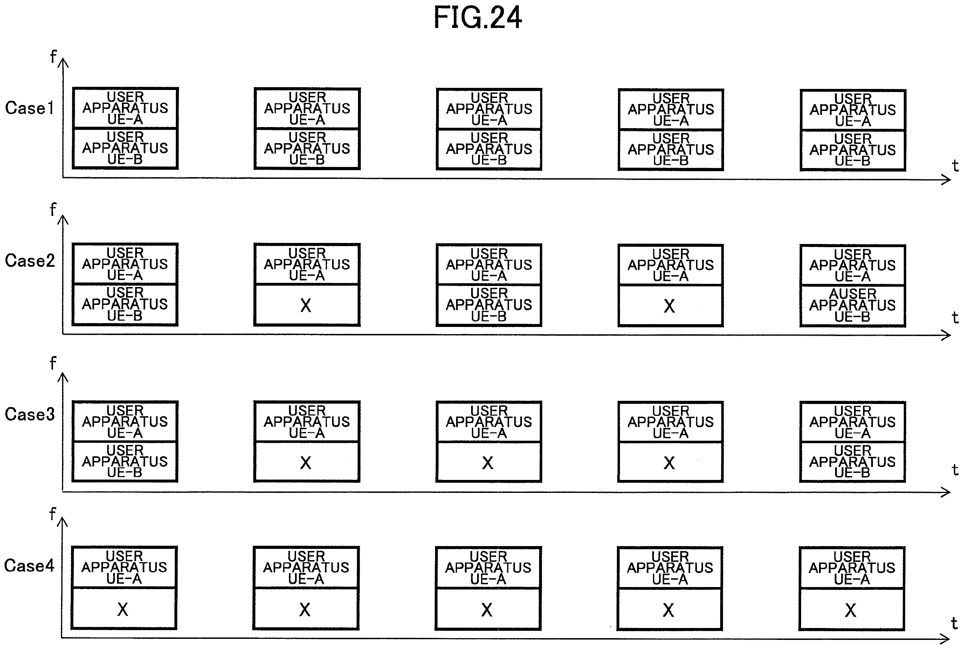

A concrete example of processes in the present embodiment is described with reference to Fig. 23 and Fig. 24. In this example, the mapping function is set to be $T_n = 2^{nk}T_m$, and the base station BS uses option 1 as the message 2.

In this case, for each of a user apparatus UE-A whose service type is 0 and a user apparatus UE-B whose service type is 1, discovery signal interval for each of values (0-3, case 1-4) of the adjustment factor k is shown in Fig. 23. Fig. 24 schematically shows transmission status of discovery signal at discovery signal intervals in each case.

As shown in Fig. 23 and Fig. 24, in case 1 (k=0), both of the user apparatuses UE-A and UE-B transmit a discovery signal at the same interval ($T_m$). In case 2 (k=1), the discovery signal interval of the user apparatus UE-A does not change. The user apparatus UE-B whose priority is low increases the discovery signal interval to $2T_m$. In case 3 (k=2), the discovery signal interval of the user apparatus UE-A does not change. The user apparatus UE-B whose priority is low further increases the discovery signal interval to $4T_m$.

In this example, it is assumed that $T_{max}$ in the service type 1 is $4T_m$. In this case, in case 4 (k=3), the discovery signal interval of the user apparatus UE-B obtained from $T_n = 2^{nk}T_m$ becomes $8T_m$ which exceeds

$T_{max}$. Thus, in case 4, the user apparatus UE-B stops discovery signal transmission.

<Configuration of user apparatus UE>

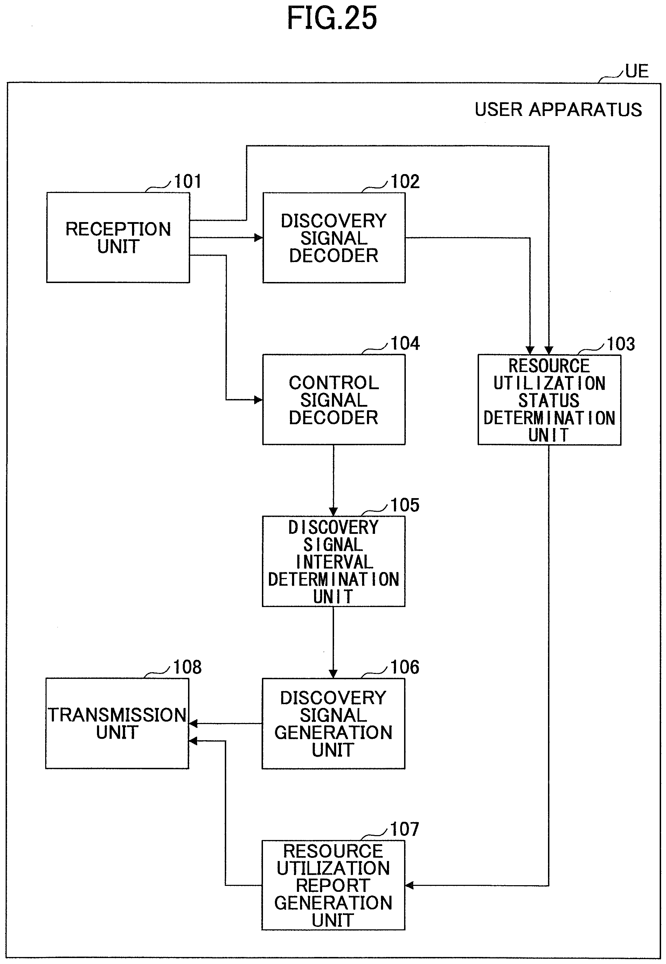

Fig. 25 shows a functional block diagram of the user apparatus UE that performs processes described so far in the present embodiment. Fig. 25 especially shows functions related to the present embodiment in the user apparatus UE. For example, the user apparatus UE may further include necessary functions for operating as UE complying with LTE (including LTE-Advanced).

As shown in Fig. 25, the user apparatus UE includes a reception unit 101, a discovery signal decoder 102, a resource utilization status determination unit 103, a control signal decoder 104, a discovery signal interval determination 105, a discovery signal generation unit 106, a resource utilization status report generation unit 107 and a transmission unit 108.

The reception unit 101 receives a discovery signal and a control signal from the base station BS. The discovery signal decoder 102 performs processes such as decoding the received discovery signal, extracting an ID of a user apparatus UE that transmits the discovery signal, and the like. The resource utilization status determination unit 103 calculates a value of resource utilization status ($N_{cb}$, $E_m$, $N_{fb}$ and the like) based on the received discovery signal and the like.

The control signal decoder 104 decodes the control signal received from the base station BS, and obtains an indicator value in a message 2. The discovery signal interval determination unit 105 holds a mapping function, and includes a function of determining a discovery signal interval from the indicator value in the message 2, and also, performs discovery signal interval control process in step 7 as shown in Fig. 22 and the like. The discovery signal generation unit 106 performs discovery signal generation at a discovery signal interval determined by the discovery signal interval determination unit 105, and transmits the discovery signal from the transmission unit 108.

The resource utilization status report generation unit 107 performs condition determination in step 2 shown in Figs. 15, 16 and the like, and when the condition is satisfied, the resource utilization report generation unit 107 generates a signal including resource utilization status, and performs a process for transmitting the signal from the transmission unit 108. The transmission unit 108 transmits a discovery signal generated by the discovery signal generation unit 106, and a signal of resource utilization status report generated by the resource utilization status report generation unit 107.

The functional sections shown in Fig. 25 are merely examples. For example, the user apparatus may be configured as a user apparatus configured to transmit and receive a discovery signal by using a discovery channel, for transmitting and receiving the discovery signal, at a discovery signal interval that is a predetermined time interval, including: a resource utilization status obtaining unit configured to obtain information indicating resource utilization status in the discovery channel; a transmission unit configured to transmit, to a base station, information indicating the resource utilization status obtained by the resource utilization status obtaining unit; and an adjustment unit configured to receive, from the base station, a control signal including an indicator value corresponding to resource utilization status in the discovery channel, and to adjust the discovery signal interval based on the indicator value included in the control signal.

The control signal may further includes information corresponding to a priority, and the adjustment unit may be configured to adjust the discovery signal interval when a priority corresponding to the information is the same as a current priority of the user apparatus. Also, the adjustment unit may be configured to increase the discovery signal interval when the indicator value is a value indicating a congestion state.

<Configuration of base station BS>

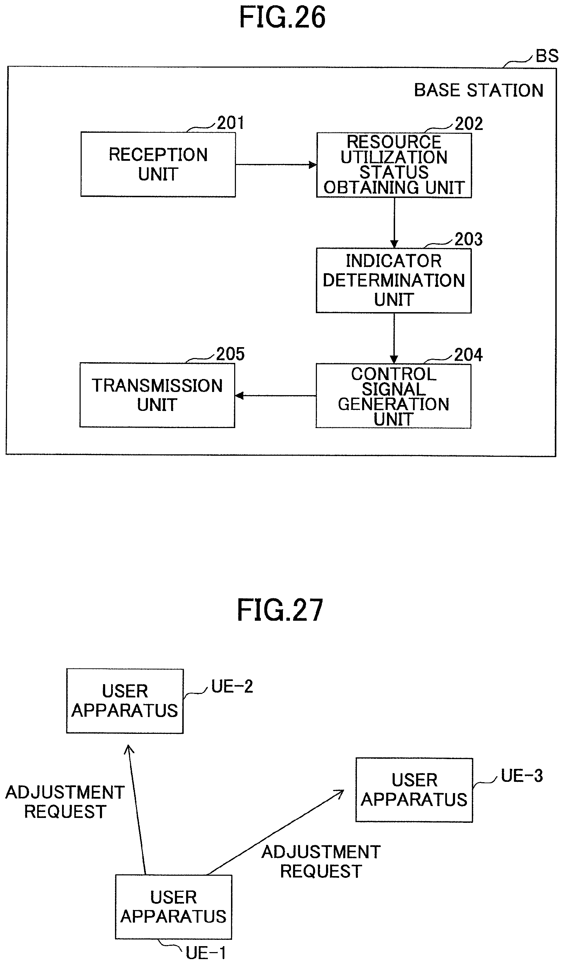

Fig. 26 shows a functional block diagram of the base station BS that performs processes described so far in the present embodiment. Fig. 26 especially shows functions related to the present embodiment in the base station BS. For example, the base station BS may further include necessary functions for operating as eNB complying with LTE (including LTE-Advanced).

As shown in Fig. 26, the base station BS includes a reception unit 201, a resource utilization status obtaining unit 202, an indicator determination unit 203, a control signal generation unit 204, and a transmission unit 205.

The reception unit 201 receives a resource utilization status report signal, a discovery signal and the like transmitted from the user apparatus UE. The resource utilization status obtaining unit 202 performs a process of step 4 shown in Fig. 20 and the like, and obtains a value of resource utilization status of the discovery channel. The indicator determination unit 203 performs the process shown in Fig. 19 and the like so as to determine an indicator value to be included in a control signal based on resource utilization status obtained by the resource utilization status obtaining unit 202. The control signal generation unit 204 generates a control signal (message 2) including an indicator value determined by the indicator determination unit 203, and transmits the control signal from the transmission unit 205. The transmission unit 205 transmits the control signal and the like.

The functional sections shown in Fig. 26 are merely examples. For example, the base station BS may be configured as a base station that communicates with a user apparatus configured to transmit and receive a discovery signal by using a discovery channel, for transmitting and receiving the discovery signal, at a discovery signal interval that is a predetermined time interval, including: a resource utilization status obtaining unit configured to obtain information indicating resource utilization status in the discovery channel based on a signal received from the user apparatus; an indicator determination unit configured to determine an indicator value corresponding to resource utilization status in the discovery channel based on information indicating the resource utilization status obtained by the resource utilization status obtaining unit; and a transmission unit configured to transmit a control signal including an indicator value determined by the indicator determination unit in order to cause the user apparatus to adjust the discovery signal interval. The control signal may further include information corresponding to a priority, and the user apparatus that receives the control signal may adjust the discovery signal interval when a priority corresponding to the information is the same as a current priority of the user apparatus.

(Second embodiment)

Next, a second embodiment is described. In the second embodiment, adjustment of a discovery signal interval is performed by transmitting and receiving a discovery signal between user apparatuses UE without passing through the base station BS. As described before, the second embodiment is divided to an embodiment 2-1 and an embodiment 2-2. In the embodiment 2-1, the user apparatus UE transmits an adjustment request by including it into a discovery signal. In the embodiment 2-2, the user apparatus UE transmits a current interval by including it in a discovery signal. In the following, each embodiment is described.

<Embodiment 2-1>

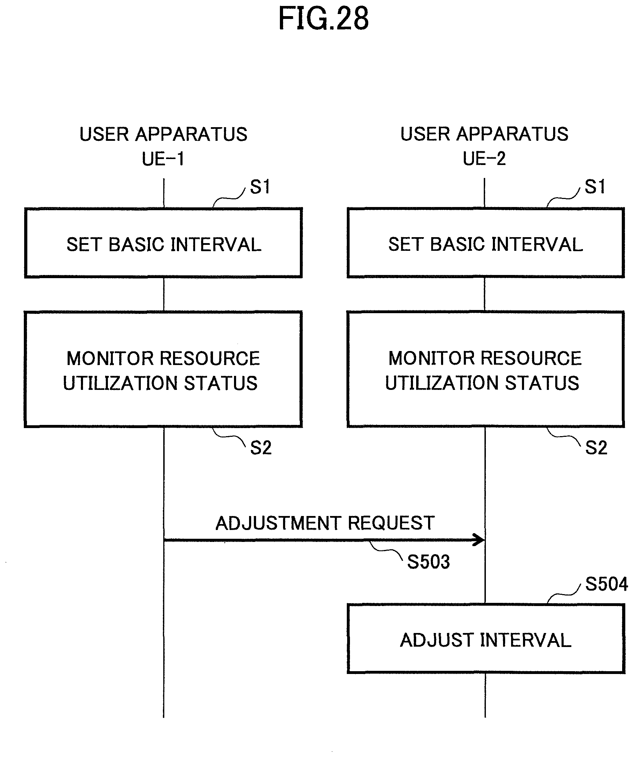

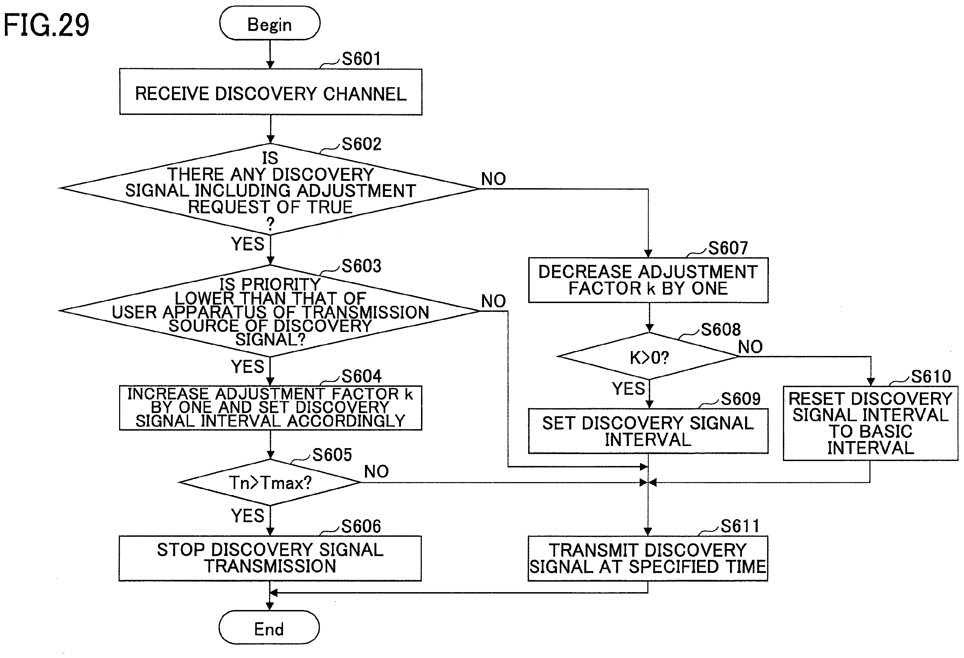

In the embodiment 2-1, as shown in Fig. 27, the user apparatus UE transmits an adjustment request to another user apparatus UE so as to perform adjustment of discovery signal interval.
In the present embodiment, an indicator indicating an adjustment request is 1 bit, and the indicator is included in a discovery signal, so that the indicator is transmitted with the discovery signal. As an example, when the adjustment request is 0, it indicates FALSE (not congested), and when it is 1, it indicates TRUE (congested). When the user apparatus UE detects a congestion state, the user apparatus UE sets 1 in the adjustment request, and when the user apparatus UE does not detect a congestion state, the user apparatus UE sets 0 to the adjustment request.
In this example, a service type (by which priority can be identified) is included in a discovery signal. A user apparatus UE that receives a discovery signal including an adjustment request adjusts (increases) a discovery signal interval of the user apparatus UE itself if a priority of the user apparatus UE itself is lower than a priority of a user apparatus UE that transmits the discovery signal and the received discovery signal includes the adjustment request of TRUE.
Next, with reference to Fig. 28, as an example, a process outline between a user apparatus UE-1 and a user apparatus UE-2 is described in the present embodiment.
Each user apparatus UE sets a basic interval (step 1), and monitors resource utilization status (step 2). The process of steps 1 and 2 is the same as that in steps 1 and 2 of the first embodiment. As shown in Figs. 15 and 16, inclusion of the adjustment request may be triggered by satisfaction of the predetermined condition, or the adjustment request may be always included without using such a trigger.
The user apparatus UE-1 transmits a discovery signal including one bit adjustment request (1: congestion state, 0: other) (step 503). In this example, the priority of the user apparatus UE-2 is lower than that of the user apparatus UE-1, so that the user apparatus UE-2 adjusts its discovery signal interval based on the adjustment request included in the discovery signal received from the user apparats UE-1 (step 504).
Operation of the user apparatus UE in the present embodiment is described in more detail with reference to Fig. 29. Although the process shown in Fig. 29 is performed for each discovery period, frequency of performing the process shown in Fig. 29 is not limited to this.
The user apparatus UE receives (listens) a discovery channel (step 601). The user apparatus UE determines whether there is a discovery signal including an adjustment request of TRUE (step 602). When the determination in step 602 is Yes, the process goes to step 603, and when the determination in step 602 is No, the process goes to step 607.
In a case where the determination in step 602 is Yes (in a case of congestion), the user apparatus UE determines whether the priority of itself is lower than a priority of a user apparatus UE of the transmission source of the discovery signal (step 603). When the priority is lower, the process goes to step 604, and when the priority is not lower, the process goes to step 611.
In step 603, when it is determined that the priority of the user apparatus UE itself is lower than the priority of the user apparatus UE of the transmission source of the discovery signal (Yes in step 603), the user apparatus UE increases an adjustment factor k of the mapping function for calculating the discovery signal interval so as to set an discovery signal interval in which the adjustment factor k is increased. Also, in the second embodiment (embodiment 2-1, embodiment 2-2), the user apparatus UE holds a mapping function described in the first embodiment, and includes a function for calculating a discovery signal interval from a service type n stored in itself and an adjustment factor k.
Next, the user apparatus UE determines whether the discovery signal interval exceeds a maximum value (step 605). When the discovery signal interval exceeds the maximum value, the user apparatus UE stops discovery signal transmission (step 606), and when the discovery signal interval does not exceed the maximum value, the user apparatus UE transmits a discovery signal at predetermined time (step 611).

In step 602, when there is no discovery signal that includes an adjustment request of TRUE (No in step 602), the user apparatus UE decrements k by 1 (step 607). Then, it is determined whether k is greater than 0 (step 608). When k is greater than 0, the user apparatus UE sets a discovery signal interval based on k (step 609), and transmits a discovery signal (step 611). When k is 0, the user apparatus UE resets the discovery signal interval to a basic interval (step 610), and transmits a discovery signal (step 611).

As mentioned above, in the present embodiment, only a user apparatus UE of low priority performs adjustment for increasing a discovery signal interval.

<Configuration of user apparatus UE>

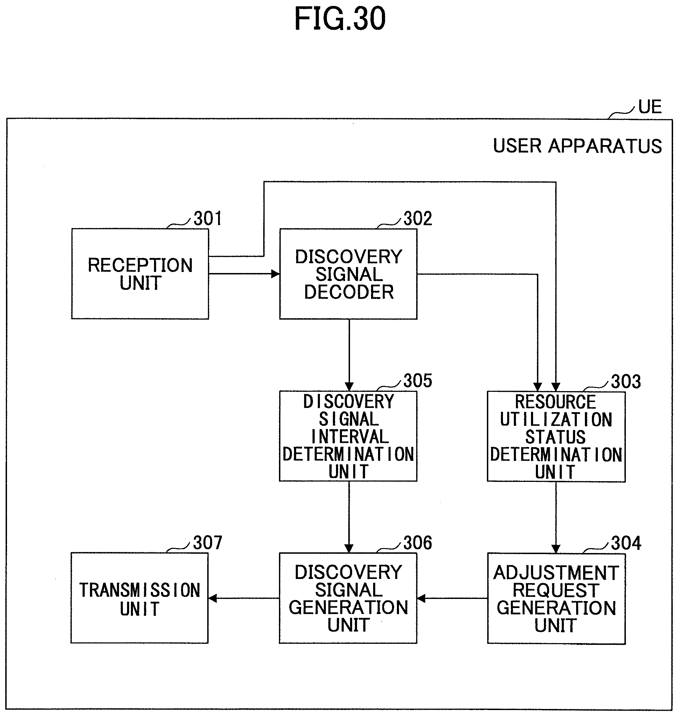

Fig. 30 shows a functional block diagram of the user apparatus UE that performs processes described so far in the embodiment 2-1. Fig. 30 especially shows functions related to the present embodiment in the user apparatus UE. For example, the user apparatus UE may further include necessary functions for operating as UE complying with LTE (including LTE-Advanced).

As shown in Fig. 30, the user apparatus UE includes a reception unit 301, a discovery signal decoder 302, a resource utilization status determination unit 303, an adjustment request generation unit 304, a discovery signal interval determination unit 305, a discovery signal generation unit 306, and a transmission unit 307.

The reception unit 301 receives a discovery signal. The discovery signal decoder 302 performs processes such as decoding the received discovery signal, extracting an ID of a user apparatus UE that transmits the discovery signal, and extracting an adjustment request (example: 1 bit) included in the discovery signal. Like the first embodiment, the resource utilization status determination unit 303 calculates a value of resource use status ($N_{cb}$, $E_m$, $N_{fb}$ and the like) based on received discovery signals and the like.

The adjustment request generation unit 304 compares the value of resource utilization status obtained by the resource utilization status determination unit 303 with a predetermined threshold so as to determine whether the state is the congestion state, determine a value of an adjustment request (example : 0 or 1), and set the determined value as the adjustment request.

The discovery signal interval determination unit 305 holds a mapping function, and determines a discovery signal interval by performing the determination process shown in Fig. 29. The discovery signal generation unit 306 performs discovery signal generation at a discovery signal interval determined by the discovery signal interval determination unit 305, and transmits the discovery signal from the transmission unit 307. The discovery signal generation unit 306 generates a discovery signal by including the adjustment request generated by the adjustment request generation unit 304 in the discovery signal. The transmission unit 307 transmits a discovery signal generated by the discovery signal generation unit 306.

The functional sections shown in Fig. 30 are merely examples. For example, the user apparatus UE may be configured as a user apparatus configured to transmit and receive a discovery signal by using a discovery channel, for transmitting and receiving the discovery signal, at a discovery signal interval that is a predetermined time interval, including: a resource utilization status obtaining unit configured to obtain information indicating resource utilization status in the discovery channel; an adjustment request generation unit configured to generate an adjustment request based on information indicating the resource utilization status obtained by the resource utilization status obtaining unit; and a transmission unit configured to transmit a discovery signal including the adjustment request generated by the adjustment request generation unit; and an adjustment unit configured to receive a discovery signal including an adjustment request, and adjust the discovery signal interval based on the adjustment request.

<Embodiment 2-2>

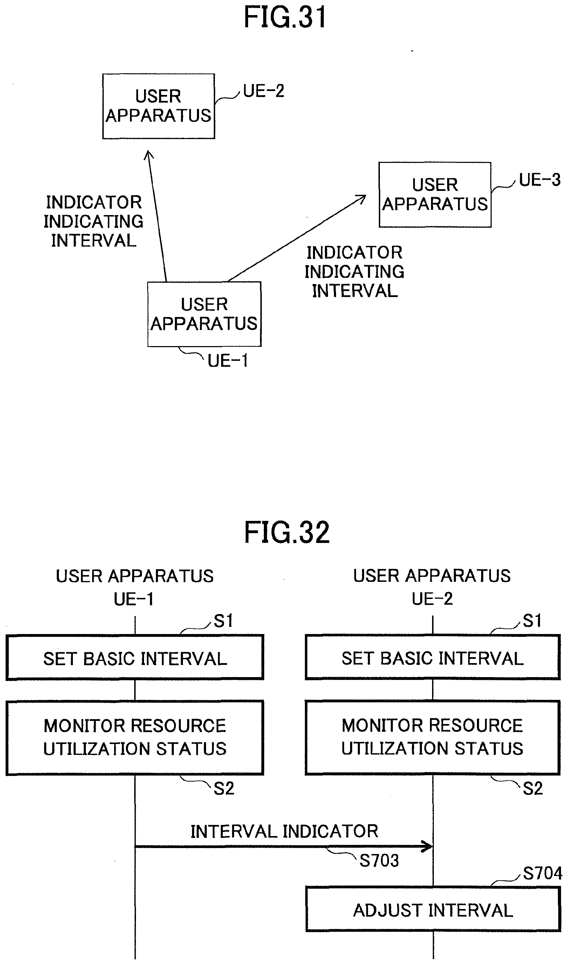

In the embodiment 2-2, as shown in Fig. 31, the user apparatus UE (user apparatus UE-1 in Fig. 31) transmits an indicator indicating a discovery signal interval to another user apparatus UE (user apparatuses UE-2, 3 in Fig. 31), so that adjustment of the discovery signal interval is performed.

In the present embodiment, the indicator indicates a current discovery signal interval of the user apparatus UE-1, and the indicator is included in the discovery signal, and is transmitted with the discovery signal. The user apparatus UE-2, 3 that receives the discovery signal can track the user apparatus UE-1 at an interval indicated by the indicator.

In this example, a user apparatus UE adjusts an interval if the user apparatus UE detects that a discovery signal interval of a user apparatus UE whose priority is lower than itself is not a base interval and detects that the state is the congestion state, based on received discovery signals. Also in the present example, the service type (priority) is identified from a discovery signal.

Next, with reference to Fig. 32, a process outline between a user apparatus UE-1 and a user apparatus UE-2 is described in the present embodiment.

Each user apparatus UE sets a basic interval (step 1), and monitors resource utilization status (step 2). The process of steps 1 and 2 is the same as that in steps 1 and 2 of the first embodiment.

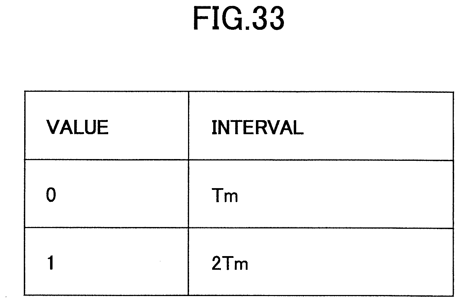

The user apparatus UE-1 transmits a discovery signal including an indicator indicating a discovery signal interval (step 703). In this example, the priority of the user apparatus UE-1 is lower than that of the user apparatus UE-2, so that the user apparatus UE-2 adjusts its discovery signal interval based on the indicator indicating the discovery signal interval included in the discovery signal received from the user apparats UE-1 (step 704). Here, 1 bit indicator shown in Fig. 33, for example, is included in the discovery signal transmitted by the user apparatus UE-1. In the example of Fig. 33, the indicator value 0 indicates an interval $T_m$, and the indicator value 1 indicates an interval $2T_m$.

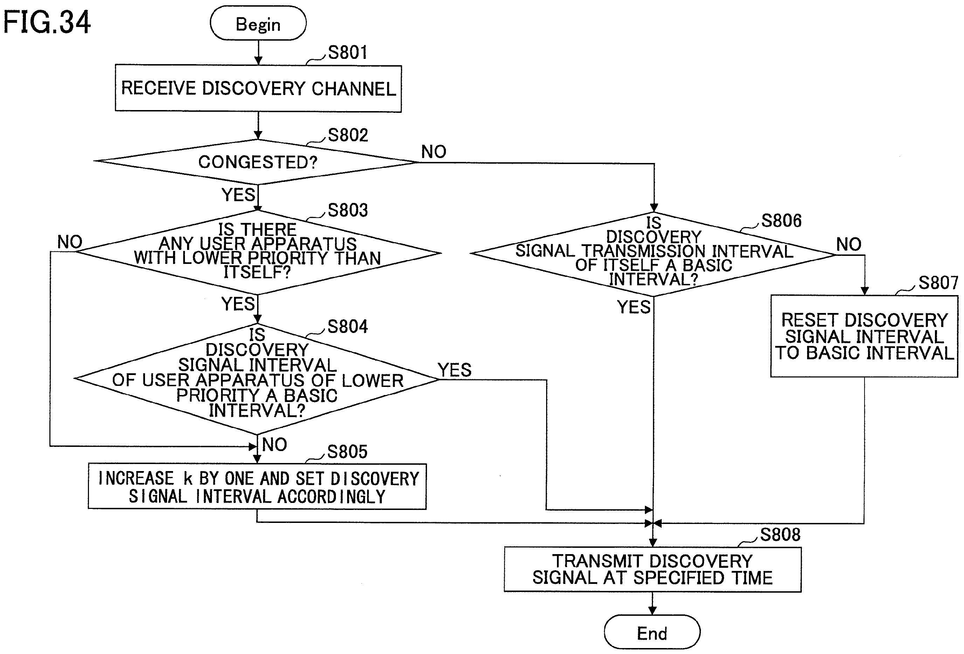

Operation of the user apparatus UE in the present embodiment is described in more detail with reference to Fig. 34. Although the process shown in Fig. 34 is performed for each discovery period, frequency of performing the process shown in Fig. 34 is not limited to this.

The user apparatus UE receives (listens) a discovery channel (step 801). The user apparatus UE determines whether the state is the congestion state based on the resource use status which the user apparatus UE monitors (step 802). When the determination in step 802 is Yes, the process goes to step 803, and when the determination in step 802 is No, the process goes to step 806.

In a case where the determination in step 802 is Yes (in a case of congestion), the user apparatus UE determines whether there is a user apparatus UE whose priority is lower than itself based on received discovery signals (step 803). When there is a user apparatus UE whose priority is lower than itself (Yes in step 803), the user apparatus UE determines whether the discovery signal interval of the low priority user apparatus UE is the basic interval (minimum interval) based on an interval indicator included in the discovery signal received from the low priority user apparatus UE (step 804). When it is the basic interval, the user apparatus UE performs transmission of a discovery signal (step 808), and when it is not the basic interval, the user apparatus UE increments k by 1, and sets the discovery signal interval based on the increased k (step 805), and performs transmission of a discovery signal (step 809). That is, in a congestion state, when there is a low priority user apparatus UE, the interval of itself is increased when the interval of the low priority user apparatus UE is increased.

In step 803, when there is no user apparatus UE whose priority is lower than that of itself, the user apparatus UE increases k by 1 without executing step 804, sets a discovery signal interval based on the increased k (step 805), and transmits a discovery signal (step 809).

When the determination in step 802 is No (when not congested), the user apparatus UE determines whether the discovery signal interval of itself is the basic interval (step 806). When it is not the basic interval (No in step 806), the user apparatus UE resets the discovery signal interval to the basic interval (step 807), and performs transmission of a discovery signal (step 808). In step 806, when the discovery signal transmission interval of itself is the basic interval (Yes in step 806), the user apparatus UE performs transmission of a discovery signal without performing step 807 (step 808).

As mentioned above, in the present embodiment, when congestion occurs, operation is performed such that the user apparatus UE of lower priority adjusts the interval before the user apparatus UE of the higher priority.

<Configuration of the user apparatus UE>

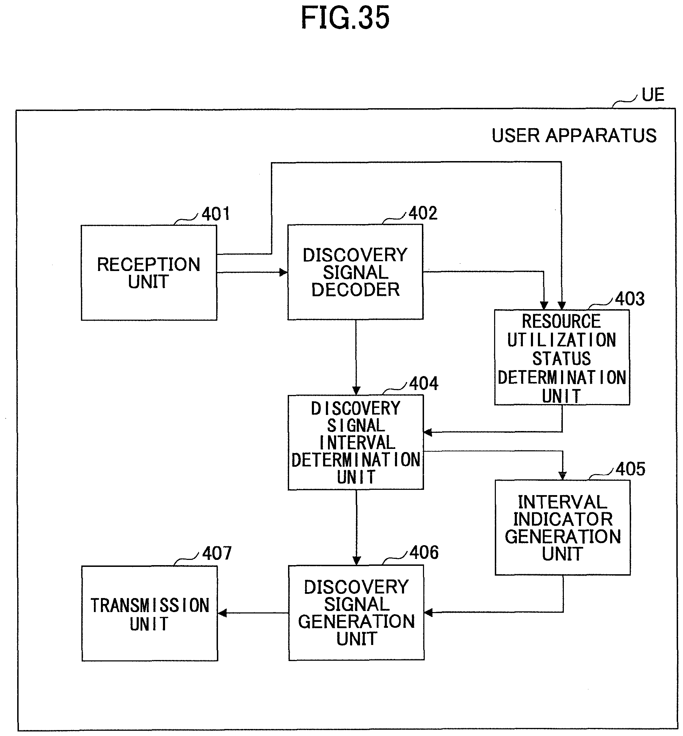

Fig. 35 shows a functional block diagram of the user apparatus UE that performs processes described so far in the embodiment 2-2. Fig. 35 especially shows functions related to the present embodiment in the user apparatus UE. For example, the user apparatus UE may further include necessary functions for operating as UE complying with LTE (including LTE-Advanced).

As shown in Fig. 35, the user apparatus UE includes a reception unit 401, a discovery signal decoder 402, a resource utilization status determination unit 403, a discovery signal interval determination unit 404, an interval indicator generation unit 405, a discovery signal generation unit 406, and a transmission unit 407.

The reception unit 401 receives a discovery signal. The discovery signal decoder 402 performs processes such as decoding the received discovery signal, extracting an ID of a user apparatus UE that transmits the discovery signal, and an interval indicator (example: 1 bit) included in the discovery signal. Like the first embodiment, the resource utilization status determination unit 403 calculates a value of resource utilization status ($N_{cb}$, $E_m$, $N_{fb}$ and the like) based on received discovery signals and the like.

The discovery signal interval determination unit 404 holds a mapping function, and determines a discovery signal interval by performing the determination process shown in Fig. 34 based on a value of resource utilization status obtained by the resource utilization status determination unit 403 (determine whether the state is the congestion state by comparing with a threshold), a service type extracted from the received discovery signal, a service type of itself, and an interval indicator extracted from the received discovery signal, and the like. The interval indicator generation unit 405 obtains a current discovery signal interval from the discovery signal interval determination unit 404, and passes it to the discovery signal generation unit 406.

The discovery signal generation unit 406 performs discovery signal generation at a discovery signal interval determined by the discovery signal interval determination unit 405, and transmits the discovery signal from the transmission unit 407. The discovery signal generation unit 406 generates a discovery signal by including the interval indicator generated by the interval indicator generation unit 405 in the discovery signal. The transmission unit 407 transmits a discovery signal generated by the discovery signal generation unit 406.

The functional sections shown in Fig. 35 are merely examples. For example, the user apparatus UE may be configured as a user apparatus configured to transmit and receive a discovery signal by using a discovery channel, for transmitting and receiving the discovery signal, at a discovery signal interval that is a predetermined time interval, including: a transmission unit configured to transmit a discovery signal including information indicating a discovery signal interval; a resource utilization status obtaining unit configured to obtain information indicating resource utilization status in the discovery channel; and an adjustment unit configured to receive a discovery signal including information indicating a discovery signal interval of another user apparatus, and adjust the discovery signal interval in the user apparatus based on information of the resource utilization status obtained by the resource utilization status obtaining unit and the discovery signal interval in the other user apparatus.

(Effects of embodiments)

As described above, according to an embodiment of the present invention, it becomes possible to reduce congestion in a state in which user apparatuses UE exist densely. According to the present embodiment, since congestion can be decreased by preferentially performing control of increasing a discovery signal interval for a low priority user apparatus UE, it becomes possible to quickly discover a high priority user apparatus in which the discovery signal interval is kept short.

In the above, each embodiment of the present invention has been explained. However, the disclosed invention is not limited to the embodiments. Those skilled in the art will conceive of various modified examples, corrected examples, alternative examples, substituted examples, and the like. While specific numerical value examples are used to facilitate understanding of the present invention, such numerical values are merely examples, and any appropriate value may be used unless specified otherwise. Classification into each item in the description is not essential in the present invention, and features described in two or more items may be combined and used as necessary. Subject matter described in an item may be applied to subject matter described in another item (provided that they do not contradict).

It is not always true that the boundaries of the functional units or the processing units in the functional block diagram correspond to boundaries of physical components. The operations by the plural functional units may be physically performed by a single component. Alternatively, the operations by the single functional unit may be physically performed by plural components.

For convenience of explanation, the user apparatus UE and the base station BS have been explained by using functional block diagrams. However, each apparatus may be implemented in hardware, software, or a combination thereof. The software that operates according to the present invention (software executed by a processor provided in the user apparatus UE, software executed by a processor provided in the base station BS) may be stored in any proper storage medium such as a Random Access Memory (RAM), a flash memory, a Read Only Memory (ROM), an EPROM, an EEPROM, a register, a hard disk (HDD), a removable disk, a CD-ROM, a database, a server and the like.

The present invention is not limited to the above-mentioned embodiment and is intended to include various variations, modifications, alterations, substitutions and so on without departing from the scope of the attached claims.

DESCRIPTION OF REFERENCE SIGNS

UE user apparatus
BS base station
101 reception unit
102 discovery signal decoder
103 resource utilization status determination unit
104 control signal decoder
105 discovery signal interval determination
106 discovery signal generation unit
107 resource utilization status report generation unit
108 transmission unit
201 reception unit
202 resource utilization status obtaining unit
203 indicator determination unit
204 control signal generation unit
205 transmission unit
301 reception unit
302 discovery signal decoder
303 resource utilization status determination unit
304 adjustment request generation unit
305 discovery signal interval determination unit
306 discovery signal generation unit
307 transmission unit
401 reception unit
402 discovery signal decoder
403 resource utilization status determination unit
404 discovery signal interval determination unit
405 interval indicator generation unit
406 discovery signal generation unit
407 transmission unit

**Claims**

1. A user apparatus (UE) configured to transmit a D2D signal at a time interval by using a channel for D2D communication, comprising:

resource utilization status obtaining means (103) configured to obtain information indicating resource utilization status in the channel for D2D communication; transmission means (108) configured to transmit, to a base station (BS), information indicating the resource utilization status obtained by the resource utilization status obtaining means; and
adjustment means configured to receive, from the base station (BS), a control signal including an indicator value and a priority related to resource utilization status in the channel for D2D communication, and to adjust the time interval of the D2D signal based on the indicator value and the priority included in the control signal.

2. A D2D signal interval adjusting method executed by a user apparatus (UE) configured to transmit a D2D signal at a time interval by using a channel for D2D communication, comprising:

a resource utilization status obtaining step of obtaining information indicating resource utilization status in the channel for D2D communication; a transmission step of transmitting, to a base station (BS), information indicating the resource utilization status obtained by the resource utilization status obtaining step; and
an adjustment step of receiving, from the base station (BS), a control signal including an indicator value and a priority related to resource utilization status in the channel for D2D communication, and adjusting the time interval of the D2D signal based on the indicator value and the priority included in the control signal.

**Patentansprüche**

1. Benutzervorrichtung (UE), die konfiguriert ist, um ein D2D-Signal in einem Zeitintervall zu übertragen, indem sie einen Kanal für D2D-Kommunikation verwendet, umfassend:

Ressourcen-Nutzstatus-Erhaltungsmittel (103), die konfiguriert sind, um Informationen mit der Anzeige des Ressourcen-Nutzstatus im Kanal für D2D-Kommunikation zu erhalten;
Übertragungsmittel (108), die konfiguriert sind, um Informationen mit der Anzeige des Ressourcen-Nutzstatus, die durch die Ressourcen-Nutzstatus-Erhaltungsmittel erhalten worden sind, an eine Basisstation (BS) zu übertragen; und
Einstellmittel, die konfiguriert sind, um von der Basisstation (BS) ein Steuersignal zu empfangen, das einen Anzeigewert und eine Priorität in Bezug auf den Ressourcen-Nutzstatus im Kanal für D2D-Kommunikation einschließt,
und um das Zeitintervall des D2D-Signals auf Basis des Anzeigewerts und der Priorität einzustellen, die im Steuersignal eingeschlossen sind.

2. D2D-Signalintervall-Einstellverfahren, ausgeführt von einer Benutzervorrichtung (UE), die konfiguriert ist, um ein D2D-Signal in einem Zeitintervall zu übertragen, indem sie einen Kanal für D2D-Kommunikation verwendet, umfassend:

einen Ressourcen-Nutzstatus-Erhaltungsschritt zum Erhalten von Informationen mit der Anzeige des Ressourcen-Nutzstatus im Kanal für D2D-Kommunikation;
einen Übertragungsschritt zur Übertragung von Informationen mit der Anzeige des Ressourcen-Nutzstatus, die im Ressourcen-Nutzstatus-Erhaltungsschritt erhalten worden sind, an eine Basisstation (BS); und
einen Einstellschritt zum Empfangen eines Steuersignals von der Basisstation (BS), das einen Anzeigewert und eine Priorität in Bezug auf den Ressourcen-Nutzstatus im Kanal für D2D-Kommunikation einschließt,
und Einstellung des Zeitintervalls des D2D-Signals auf Basis des Anzeigewerts und der Priorität, die im Steuersignal eingeschlossen sind.

**Revendications**

1. Dispositif d'utilisateur (UE) configuré pour transmettre un signal D2D à un intervalle de temps en utilisant un canal pour communication D2D, comprenant :

des moyens d'obtention d'état d'utilisation de ressources (103) configurés pour obtenir des informations indiquant un état d'utilisation de ressources dans le canal pour communication D2D ;
des moyens de transmission (108) configurés pour transmettre, à une station de base (BS), des informations indiquant l'état d'utilisation de ressources obtenues par les moyens d'obtention d'état d'utilisation de ressources ; et
des moyens de réglage configurés pour recevoir, de la station de base (BS), un signal de commande incluant une valeur d'indicateur et une priorité liée à un état d'utilisation de ressources dans le canal pour communication D2D, et pour régler l'intervalle de temps du signal D2D sur la base de la valeur d'indicateur et de la priorité incluses dans le signal de commande.

2. Procédé de réglage d'intervalle de signal D2D exécuté par un dispositif d'utilisateur (UE) configuré pour transmettre un signal D2D à un intervalle de temps en utilisant un canal pour communication D2D, comprenant :

une étape d'obtention d'état d'utilisation de ressources consistant à obtenir des informations indiquant un état d'utilisation de ressources dans le canal pour communication D2D ;

une étape de transmission consistant à transmettre, à une station de base (BS), des informations indiquant l'état d'utilisation de ressources obtenu par l'étape d'obtention d'état d'utilisation de ressources ; et

une étape de réglage consistant à recevoir, de la station de base (BS), un signal de commande incluant une valeur d'indicateur et une priorité liée à un état d'utilisation de ressources dans le canal pour communication D2D,

et régler l'intervalle de temps du signal D2D sur la base de la valeur d'indicateur et de la priorité incluses dans le signal de commande.

# FIG.1

| USER APPARATUS | DISCOVERY SIGNAL TRANSMIT (BROADCAST) | USER APPARATUS | ⟹ | UE-B DISCOVERS UE-A |

UE-A → UE-B

# FIG.2

D2D DISCOVERY          WAN

DISCOVERY SIGNAL INTERVAL

RADIO RESOURCE FOR D2D DISCOVERY (DISCOVERY CHANNEL)

RADIO RESOURCE OF WAN

USER APPARATUS 1 SELECTS

USER APPARATUS 2 SELECTS

EP 2 999 284 B1

# FIG.3

UE5    UE6    UE7    UE8

UE1  UE2  UE3  UE4

8 APPARATUSES COMPETE
FOR 4 RESOURCE BLOCKS

# FIG.4

| | SERVICE TYPE (n) | EXPLANATION | INTERVAL | PRIORITY |
|---|---|---|---|---|
| SERVICE CLASSIFI- CATION | 0 | PUBLIC SAFETY SERVICE | INTERVAL 0 ($T_0$) | 0 (HIGH) |
| | 1 | COMMERCIAL ADVERTISING SERVICE | INTERVAL 1 ($T_1$) | 1 (LOW) |

# FIG.5

EP 2 999 284 B1

DISCOVERY
CHANNEL

USER
APPARATUS
UE-A
HIGH
PRIORITY

INTER-
VAL 0

USER
APPARATUS
UE-B
LOW
PRIORITY

INTERVAL
1

(a)

CONGESTION
⟹
INCREASE
INTERVAL

LOW UTILIZA-
TION STATE
⟸
RESET
INTERVAL

DISCOVERY
CHANNEL

USER
APPARATUS
UE-A
HIGH
PRIORITY

INTER-
VAL 0

USER
APPARATUS
UE-B
LOW
PRIORITY

INCREASED
INTERVAL 1

(b)

# FIG.6

A

MESSAGE 1

BS

USER
APPARATUS

UE-A

B

MESSAGE 2

B

MESSAGE 2

USER
APPARATUS

UE-B

# FIG.7

USER APPARATUS
UE-B

USER APPARATUS
UE-A

BS

S1
SET BASIC
INTERVAL

S1
SET BASIC
INTERVAL

MONITOR
RESOURCE
UTILIZATION
STATUS
OF DISCOVERY
CHANNEL

MONITOR
RESOURCE
UTILIZATION
STATUS
OF DISCOVERY
CHANNEL
S2

S2

REPORT RESOURCE
UTILIZATION STATUS

S4
MONITOR
RESOURCE
UTILIZATION
STATUS
OF DISCOVERY
CHANNEL

(MESSAGE 1)

S3

DETERMINE
INDICATOR
VALUE IN
CONTROL SIGNAL
S5

REPORT CONTROL SIGNAL

(MESSAGE 2)     S6

REPORT CONTROL SIGNAL

(MESSAGE 2)     S6

S7
ADJUST
INTERVAL

S7
ADJUST
INTERVAL

# FIG.8

| CONGESTION | EXPLANATION | FREE TIME-FREQUENCY BLOCK IS NOT DETECTED, SOME USER APPARATUSES SELECT THE SAME TIME-FREQUENCY BLOCK FOR TRANSMITTING DISCOVERY SIGNAL |
| --- | --- | --- |
| | METRIC EXAMPLE | 1) $E_m$: NORMALIZED MEAN ENERGY OF BLOCKS WHOSE ENERGY ARE WITHIN LOWER $q$% OF ALL BLOCKS<br>2) $N_{cb}$: THE NUMBER OF BLOCKS, WHERE COLLISION OCCURS, DETECTED BY USER APPARATUS |
| LOW UTILIZATION STATE | EXPLANATION | FREE TIME-FREQUENCY BLOCK EXISTS |
| | METRIC EXAMPLE | $N_{fb}$: THE NUMBER OF FREE TIME-FREQUENCY BLOCKS |

EP 2 999 284 B1

# FIG.9

EP 2 999 284 B1

(a) RESOURCE UTILIZATION STATUS INFORMATION ELEMENT : 10 BIT

| | B0 | B1 B2 | B9 |
|---|---|---|---|
| | TYPE | VALUE | |

(b)

| TYPE | | | VALUE | |
|------|------|------|-----------|-------------|
| Bit0 | Bit1 | Name | Bit2~Bit9 | EXPLANATION |
| 0 | 0 | $E_m$ | 0~255 | NORMALIZED MEAN ENERGY OF BLOCKS WHOSE ENERGY ARE WITHIN LOWER q% OF ALL BLOCKS |
| 0 | 1 | $N_{cb}$ | 0~255 | THE NUMBER OF BLOCKS, WHERE COLLISION OCCURS, DETECTED BY USER APPARATUS |
| 1 | 0 | $N_{fb}$ | 0~255 | THE NUMBER OF FREE TIME-FREQUENCY BLOCKS DETECTED BY USER APPARATUS |
| 1 | 1 | Reserved | Reserved | ---- |

# FIG.10

| OPTION | USAGE | EXAMPLE (2 SERVICE TYPES) |
|---|---|---|
| OPTION 1:<br>1 ADJUSTMENT FACTOR FIELD | WHEN k IS CHANGED, EVERY DISCOVERY SIGNAL INTERVAL IS CHANGED IRRESPECTIVE OF SERVICE TYPE | 2 BITS INDICATE 4 KINDS OF k<br><br>B0 ⟶ B1<br>\| ADJUSTMENT FACTOR \| |
| OPTION 2:<br>ENABLE BIT +<br>SERVICE TYPE +<br>ADJUSTMENT FACTOR | WHEN ENABLE BIT=1, BASE STATION BS CAN ADJUST INTERVAL OF DESIGNATED SERVICE TYPE.<br>WHEN ENABLE BIT=0, DESIGNATION OF SERVICE TYPE BECOMES INVALID, AND DISCOVERY SIGNAL INTERVAL OF EVERY USER APPARATUS IS CHANGED. | 4 BIT INFORMATION ELEMENT<br><br>B0   B1   B2   B3<br>\| ENABLE BIT \| SERVICE TYPE \| ADJUSTMENT FACTOR \| |
| OPTION 3:<br>A PLURALITY OF ADJUSTMENT FACTOR FIELDS | EACH FIELD IS ASSOCIATED WITH ONE SERVICE TYPE, AND BASE STATION BS CAN CONTROL DISCOVERY SIGNAL INTERVAL OF A PLURALITY OF DIFFERENT SERVICE TYPES. | 2 ADJUSTMENT FACTOR FIELDS (4 BITS)<br><br>B0   B1   B2   B3<br>\| ADJUSTMENT FACTOR 1 \| ADJUSTMENT FACTOR 2 \| |

EP 2 999 284 B1

# FIG.11

| RESOURCE UTILIZATION STATUS | ADJUSTMENT FACTOR (k) | |
|---|---|---|
| | DECIMAL | BINARY |
| HIGH CONGESTION | 3 | 11 |
| MIDDLE CONGESTION | 2 | 10 |
| LOW CONGESTION | 1 | 01 |
| LOW UTILIZATION STATE | 0 | 00 |

# FIG.12

| | B0 B1 B2 B3 | MEANING |
|---|---|---|
| E.g.1 | 0  0  0  0 | BASE STATION BS NOTIFIES EVERY USER APPARATUS TO RESET TO BASIC INTERVAL OF DISCOVERY SIGNAL INTERVAL |
| E.g.2 | 1  1  1  0 | BASE STATION BS NOTIFIES USER APPARATUS OF SERVICE TYPE 1 TO ADJUST TO LEVEL 2 OF DISCOVERY SIGNAL TRANSMISSION INTERVAL |

EP 2 999 284 B1

# FIG.13

| | B0 B1 B2 B3 | MEANING |
|---|---|---|
| E.g.1 | 0  0  1  0 | BASE STATION BS NOTIFIES USER APPARATUS OF SERVICE TYPE 0 TO RESET TO BASIC INTERVAL OF DISCOVERY SIGNAL INTERVAL, AND NOTIFIES USER APPARATUS OF SERVICE TYPE 1 TO ADJUST TO LEVEL 2 OF DISCOVERY SIGNAL TRANSMISSION INTERVAL |
| E.g.2 | 0  1  1  0 | BASE STATION BS NOTIFIES USER APPARATUS OF SERVICE TYPE 0 TO ADJUST TO LEVEL 1 OF DISCOVERY SIGNAL INTERVAL, AND NOTIFIES USER APPARATUS OF SERVICE TYPE 1 TO ADJUST TO LEVEL 2 OF DISCOVERY SIGNAL TRANSMISSION INTERVAL |

EP 2 999 284 B1

# FIG.14

| SERVICE TYPE (n) | EXPLANATION | INTERVAL | PRIORITY |
|---|---|---|---|
| 0 | PUBLIC SAFETY SERVICE | Interval 0 ($T_0$) | 0 (HIGH) |
| 1 | COMMERCIAL ADVERTISING SERVICE | Interval 1 ($T_1$) | 1 (LOW) |

| EXAMPLE OF MAPPING FUNCTION | EXPLANATION |
|---|---|
| 1) $T_n=2^{nk}T_m$ | ➤ WHEN k=0, ALL THE SERVICE TYPES HAVE THE SAME DISCOVERY SIGNAL INTERVAL |
| 2) $T_n=2^{(n+k)}T_m$ | ➤ WHEN k=0, DISCOVERY SIGNAL INTERVAL IS DIFFERENT FOR EACH SERVICE TYPE |
| 3) $T_n=T_{n,b}+k*T_{n,s}$ | ➤ WHEN k=0, DISCOVERY SIGNAL INTERVAL MAY BE DIFFERENT FOR EACH SERVICE TYPE<br>➤ $T_{n,b}$: INDICATES BASIC DISCOVERY SIGNAL INTERVAL OF SERVICE TYPE n, AND IS PREDETERMINED MULTIPLE TIMES OF $T_m$, FOR EXAMPLE<br>➤ $T_{n,s}$: INDICATES ADJUSTMENT STEP OF SERVICE TYPE n, AND IS PREDETERMINED MULTIPLE TIMES OF $T_m$, FOR EXAMPLE |

# FIG.15

```
          ┌─────────┐
          │  Begin  │
          └─────────┘
               │
               ▼                          S211
    ┌──────────────────────┐
    │  RECEIVE DISCOVERY    │
    │      CHANNEL          │
    └──────────────────────┘
               │
               ▼                          S212
    ┌──────────────────────┐
    │   CALCULATE $N_{fb}$  │
    └──────────────────────┘
               │
               ▼                  S213
          ╱─────────────╲          NO
         ╱  $N_{fb} \geq N_{fth}$? ╲──────────┐
          ╲─────────────╱                     │
               │ YES                           │
               ▼                  S214         │
    ┌──────────────────────┐                   │
    │  DETECT LOW UTILIZATION│                  │
    │        STATE          │                   │
    └──────────────────────┘                   │
```

```
                                    S215
                         ┌──────────────────────┐
                         │   CALCULATE $N_{cb}$  │
                         └──────────────────────┘
                                    │
                                    ▼              S216
                               ╱─────────────╲       NO
                              ╱ $N_{cb} \geq N_{th}$? ╲────┐
                               ╲─────────────╱            │
                                    │ YES                 │
                                    ▼          S217        │
                         ┌──────────────────────┐          │
                         │  DETECT CONGESTION    │          │
                         │        STATE          │          │
                         └──────────────────────┘          │
                                    │                       │
                                    ▼              S218      │
                         ┌──────────────────────┐            │
                         │   TRIGGER REPORT      │            │
                         │   OF RESOURCE         │            │
                         │ UTILIZATION STATUS    │            │
                         └──────────────────────┘            │
                                    │                        │
                                    ▼◄──────────────────────┘
                               ┌─────────┐
                               │   End   │
                               └─────────┘
```

# FIG.16

```
                    ┌─────────┐
                    │  Begin  │
                    └─────────┘
                         │
                         ▼              S221
              ┌────────────────────────┐
              │   RECEIVE DISCOVERY    │
              │       CHANNEL          │
              └────────────────────────┘
                         │
                         ▼              S222                              S225
              ┌────────────────────────┐          ┌────────────────────────┐
              │    CALCULATE $N_{fb}$   │          │    CALCULATE $E_m$      │
              └────────────────────────┘          └────────────────────────┘
                         │                                    │
                         ▼              S223                   ▼              S226
                    ╱─────────╲        NO              ╱─────────╲        NO
                  ╱  $N_{fb} \geq N_{fth}$?  ╲────────────╱  $E_m \geq E_{th}$?  ╲──────┐
                    ╲─────────╱                  ╲─────────╱                 │
                         │ YES                          │ YES               │
                         ▼              S224             ▼              S227 │
              ┌────────────────────────┐      ┌────────────────────────┐    │
              │   DETECT LOW UTILIZATION│      │    DETECT CONGESTION   │    │
              │        STATE           │      │        STATE           │    │
              └────────────────────────┘      └────────────────────────┘    │
                         │                              │                    │
                         └──────────────┐              │                    │
                                        ▼              │            S228     │
                              ┌────────────────────────┐                    │
                              │    TRIGGER REPORT      │                     │
                              │     OF RESOURCE        │                     │
                              │  UTILIZATION STATUS    │                     │
                              └────────────────────────┘                    │
                                        │◄──────────────────────────────────┘
                                        ▼
                                   ┌─────────┐
                                   │   End   │
                                   └─────────┘
```

# FIG.17

# FIG.18

# FIG.19

| CONDITION | RESOURCE UTILIZATION STATUS LEVEL | ADJUSTMENT FACTOR k |
|---|---|---|
| $(N_{cb} \geq N_{th2})$ or $(E_m \geq E_{th2})$ | HIGH CONGESTION | 3 |
| $(N_{th1} \leq N_{cb} < N_{th2})$ or $(E_{th1} \leq E_m < E_{th2})$ | MIDDLE CONGESTION | 2 |
| $(N_{th0} \leq N_{cb} < N_{th1})$ or $(E_{th0} \leq E_m < E_{th1})$ | LOW CONGESTION | 1 |
| $N_{fb} \geq N_{fth}$ | LOW UTILIZATION STATE | 0 |

# FIG.20

```
              Begin

   BASE STATION BS MONITORS
   RESOURCE UTILIZATION STATUS
                                    }  S4
   CALCULATE AVERAGE VALUE OF
        N_cb, E_m, N_fb

                              ～S5
   DETERMINE ADJUSTMENT
       FACTOR k

                              ～S6
   BROADCAST MESSAGE 2

               End
```

# FIG.21

# FIG.22

```
                              Begin

                                │
                                ▼            S401
                    ┌───────────────────────┐
                    │   RECEIVE MESSAGE 2    │
                    │  BY CONTROL SIGNALING  │
                    └───────────────────────┘
                                │
                                ▼              S402
                          ╱           ╲
                        ╱       IS       ╲
              NO      ╱    SERVICE TYPE     ╲
          ◄─────────╱ INCLUDED IN MESSAGE 2  ╲
                    ╲   THE SAME AS SERVICE   ╱
                      ╲    TYPE OF ITSELF   ╱
                        ╲       ?        ╱
                          ╲           ╱
                              YES
                                │
                                ▼          S403
                          ╱           ╲      NO
                        ╱    K=0?        ╲──────────►
                          ╲           ╱
                              YES
                                │
                                ▼              S404
                    ┌───────────────────────┐
                    │   RESET DISCOVERY      │
                    │   SIGNAL INTERVAL      │
                    │   TO BASIC INTERVAL    │
                    └───────────────────────┘
                                │
                                ▼            S405
                    ┌───────────────────────┐
                    │  TRANSMIT DISCOVERY    │
                    │ SIGNAL AT SPECIFIED TIME│
                    │  (DISCOVERY PERIOD)    │
                    └───────────────────────┘
                                │
                                ▼
                              End
```

```
                                              S406
                              ┌───────────────────────┐
                              │       ADJUST           │
                              │  DISCOVERY SIGNAL      │
                              │     INTERVAL           │
                              │  ACCORDING TO k        │
                              └───────────────────────┘
                                        │
                                        ▼          S407
                              NO  ╱           ╲
                          ◄──────╱  Tn>Tmax?    ╲
                                  ╲           ╱
                                      YES
                                        │
                                        ▼            S408
                              ┌───────────────────────┐
                              │        STOP           │
                              │  TRANSMISSION OF      │
                              │  DISCOVERY SIGNAL     │
                              └───────────────────────┘
```

34

# FIG.23

| | SERVICE TYPE | Case 1 (k=0) | Case 2 (k=1) | Case 3 (k=2) | Case 4 (k=3) |
|---|---|---|---|---|---|
| USER APPARATUS UE-A | n=0 | $T_m$ | $T_m$ | $T_m$ | $T_m$ |
| USER APPARATUS UE-B | n=1 | $T_m$ | $2T_m$ | $4T_m$ | STOP DISCOVERY SIGNAL TRANSMISSION |

# FIG.24

Case1

| | | | | |
|---|---|---|---|---|
| USER APPARATUS UE-A | USER APPARATUS UE-A | USER APPARATUS UE-A | USER APPARATUS UE-A | USER APPARATUS UE-A |
| USER APPARATUS UE-B | USER APPARATUS UE-B | USER APPARATUS UE-B | USER APPARATUS UE-B | USER APPARATUS UE-B |

Case2

| | | | | |
|---|---|---|---|---|
| USER APPARATUS UE-A | USER APPARATUS UE-A | USER APPARATUS UE-A | USER APPARATUS UE-A | USER APPARATUS UE-A |
| USER APPARATUS UE-B | X | USER APPARATUS UE-B | X | AUSER APPARATUS UE-B |

Case3

| | | | | |
|---|---|---|---|---|
| USER APPARATUS UE-A | USER APPARATUS UE-A | USER APPARATUS UE-A | USER APPARATUS UE-A | USER APPARATUS UE-A |
| USER APPARATUS UE-B | X | X | X | USER APPARATUS UE-B |

Case4

| | | | | |
|---|---|---|---|---|
| USER APPARATUS UE-A | USER APPARATUS UE-A | USER APPARATUS UE-A | USER APPARATUS UE-A | USER APPARATUS UE-A |
| X | X | X | X | X |

# FIG.25

# FIG.26

BS

BASE STATION

201
RECEPTION UNIT

202
RESOURCE UTILIZATION STATUS OBTAINING UNIT

203
INDICATOR DETERMINATION UNIT

205
TRANSMISSION UNIT

204
CONTROL SIGNAL GENERATION UNIT

# FIG.27

USER APPARATUS UE-2

USER APPARATUS UE-3

ADJUSTMENT REQUEST

ADJUSTMENT REQUEST

USER APPARATUS UE-1

# FIG.28

USER APPARATUS
UE-1

USER APPARATUS
UE-2

S1

S1

| SET BASIC INTERVAL | | SET BASIC INTERVAL |

| MONITOR RESOURCE UTILIZATION STATUS | | MONITOR RESOURCE UTILIZATION STATUS |

S2

S2

ADJUSTMENT REQUEST

S503

S504

| ADJUST INTERVAL |

# FIG.29

```
                        ( Begin )
                            │
                            │ ⌐S601
                            ▼
              ┌──────────────────────────────┐
              │  RECEIVE DISCOVERY CHANNEL    │
              └──────────────────────────────┘
                            │
                            │ ⌐S602
                            ▼
                    ╱╲ IS ╱╲
                   ╱ THERE ANY DISCOVERY ╲      NO
                  ╱ SIGNAL INCLUDING ADJUSTMENT ╲──────┐
                  ╲ REQUEST OF TRUE            ╱        │
                   ╲         ?         ╱               │
                    ╲╱                                 │
                   YES │                               ▼  ⌐S607
                       │ ⌐S603            ┌──────────────────────────┐
                       ▼                  │  DECREASE ADJUSTMENT     │
                ╱╲ IS PRIORITY ╱╲   NO    │  FACTOR k BY ONE         │
               ╱ LOWER THAN THAT OF ╲─────┤                          │
              ╱ USER APPARATUS OF   ╲     └──────────────────────────┘
              ╲ TRANSMISSION SOURCE ╱              │
               ╲ OF DISCOVERY      ╱               │ ⌐S608
                ╲ SIGNAL?╱                         ▼
                  YES │                      ╱╲ K>0? ╱╲  NO
                      │ ⌐S604                ╲        ╱────────┐
                      ▼                        ╲╱              │
          ┌────────────────────────┐        YES │             ▼  ⌐S610
          │ INCREASE ADJUSTMENT     │           │ ⌐S609   ┌──────────────┐
          │ FACTOR k BY ONE AND SET │           ▼         │ RESET        │
          │ DISCOVERY SIGNAL        │  ┌──────────────┐   │ DISCOVERY    │
          │ INTERVAL ACCORDINGLY    │  │ SET DISCOVERY │  │ SIGNAL       │
          └────────────────────────┘  │ SIGNAL        │  │ INTERVAL     │
                      │                │ INTERVAL      │  │ TO BASIC     │
                      │ ⌐S605          └──────────────┘   │ INTERVAL     │
                      ▼                        │          └──────────────┘
               ╱╲ Tn>Tmax? ╱╲   NO            │                 │
               ╲           ╱──────────────────┤                 │
                 ╲╱                            ▼◄────────────────┘
                YES │                          │ ⌐S611
                    │ ⌐S606                     ▼
          ┌────────────────────┐   ┌────────────────────────┐
          │ STOP DISCOVERY      │   │ TRANSMIT DISCOVERY     │
          │ SIGNAL TRANSMISSION │   │ SIGNAL AT SPECIFIED TIME│
          └────────────────────┘   └────────────────────────┘
                    │                          │
                    │◄─────────────────────────┘
                    ▼
                ( End )
```

# FIG.30

# FIG.31

USER APPARATUS — UE-2

INDICATOR INDICATING INTERVAL

USER APPARATUS — UE-3

INDICATOR INDICATING INTERVAL

USER APPARATUS — UE-1

# FIG.32

| USER APPARATUS UE-1 | USER APPARATUS UE-2 |
|---|---|
| S1 | S1 |
| SET BASIC INTERVAL | SET BASIC INTERVAL |
| MONITOR RESOURCE UTILIZATION STATUS | MONITOR RESOURCE UTILIZATION STATUS |
| S2 | S2 |

INTERVAL INDICATOR

S703

S704

ADJUST INTERVAL

# FIG.33

| VALUE | INTERVAL |
|-------|----------|
| 0 | Tm |
| 1 | 2Tm |

# FIG.34

```
                    ( Begin )
                         │  ⌇S801
                         ▼
            ┌────────────────────────────┐
            │   RECEIVE DISCOVERY CHANNEL │
            └────────────────────────────┘
                         │  ⌇S802
                         ▼                        NO
                  ◇  CONGESTED?  ◇──────────────────────────┐
                         │                                   │
                        YES                                  │
                         │  ⌇S803                            ▼  ⌇S806
       NO        ◇   IS THERE              ◇         ◇    IS            ◇   NO
      ┌──────────   ANY USER APPARATUS              DISCOVERY                ──────┐
      │          WITH LOWER PRIORITY THAN      SIGNAL TRANSMISSION INTERVAL        │
      │                ITSELF?                    OF ITSELF A BASIC               │
      │                 │                            INTERVAL?                    │
      │                YES                              │                         ▼  ⌇S807
      │                 │  ⌇S804                       YES               ┌──────────────────┐
      │          ◇      IS       ◇   YES                │                │ RESET DISCOVERY  │
      │             DISCOVERY       ──────┐             │                │ SIGNAL INTERVAL  │
      │          SIGNAL INTERVAL          │             │                │ TO BASIC INTERVAL│
      │      OF USER APPARATUS OF LOWER   │             │                └──────────────────┘
      │          PRIORITY A BASIC         │             │                         │
      │             INTERVAL?             │             │                         │
      │                 │ NO              │             │                         │
      │                 │  ⌇S805          │             │                         │
      └────────────────▶│                 │             │                         │
            ┌────────────────────────────┐│             │                         │
            │ INCREASE k BY ONE AND SET DISCOVERY        │                         │
            │ SIGNAL INTERVAL ACCORDINGLY │              │                         │
            └────────────────────────────┘              │                         │
                         │                 └────────────▶│◀────────────────────────┘
                         │                               ▼  ⌇S808
                         │              ┌────────────────────────────┐
                         └─────────────▶│   TRANSMIT DISCOVERY       │
                                        │ SIGNAL AT SPECIFIED TIME   │
                                        └────────────────────────────┘
                                                     │
                                                     ▼
                                                 ( End )
```

EP 2 999 284 B1

# FIG.35

UE

USER APPARATUS

RECEPTION UNIT — 401

DISCOVERY SIGNAL DECODER — 402

RESOURCE UTILIZATION STATUS DETERMINATION UNIT — 403

DISCOVERY SIGNAL INTERVAL DETERMINATION UNIT — 404

INTERVAL INDICATOR GENERATION UNIT — 405

TRANSMISSION UNIT — 407

DISCOVERY SIGNAL GENERATION UNIT — 406

**EP 2 999 284 B1**

## REFERENCES CITED IN THE DESCRIPTION

**Patent documents cited in the description**

- US 20120191966 A1
- US 7984132 B
- US 8189508 B2